(19) Europäisches Patentamt / European Patent Office / Office européen des brevets

(11) **EP 4 609 255 B1**

(12) **FASCICULE DE BREVET EUROPEEN**

(45) Date de publication et mention de la délivrance du brevet:
**29.07.2026 Bulletin 2026/31**

(21) Numéro de dépôt: **23817181.3**

(22) Date de dépôt: **26.10.2023**

(51) Classification Internationale des Brevets (IPC):
**G02B 17/08** *(2006.01)* **G02B 23/06** *(2006.01)*
**G02B 27/00** *(2006.01)*

(52) Classification Coopérative des Brevets (CPC):
**G02B 27/0025; G02B 17/0852; G02B 17/0888; G02B 23/06**

(86) Numéro de dépôt international:
**PCT/FR2023/051684**

(87) Numéro de publication internationale:
**WO 2024/089367 (02.05.2024 Gazette 2024/18)**

(54) **TÉLESCOPE DE SCHMIDT À PERFORMANCES AMÉLIORÉES, DISPOSITIFS ET PROCÉDÉ DE DÉTECTION ASSOCIÉS**

SCHMIDT-TELESKOP MIT VERBESSERTER LEISTUNG, ZUGEHÖRIGE DETEKTIONSVORRICHTUNGEN UND VERFAHREN

SCHMIDT TELESCOPE WITH IMPROVED PERFORMANCE, ASSOCIATED DETECTING DEVICES AND METHOD

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **26.10.2022 FR 2211130**

(43) Date de publication de la demande:
**03.09.2025 Bulletin 2025/36**

(73) Titulaire: **Safran Reosc**
**91280 Saint-Pierre-du-Perray (FR)**

(72) Inventeur: **GEYL, Roland**
**77550 MOISSY-CRAMAYEL (FR)**

(74) Mandataire: **Gevers & Orès**
**Immeuble le Palatin 2**
**3 Cours du Triangle**
**CS 80165**
**92939 Paris La Défense Cedex (FR)**

(56) Documents cités:
**WO-A1-01/59488**

- **YUDIN ALEXEY N ET AL: "Fast catadioptric telescopes for CCD observation of transient events and space surveillance", OPTICAL COMPLEX SYSTEMS: OCS11, SPIE, 1000 20TH ST. BELLINGHAM WA 98225-6705 USA, vol. 8172, no. 1, 22 September 2011 (2011-09-22), pages 1 - 10, XP060019823, DOI: 10.1117/12.896699**
- **JONES L ED - BASS M (ED): "REFLECTIVE AND CATADIOPTRIC OBJECTIVES", 1 January 1995, HANDBOOK OF OPTICS, VOLUME II, DEVICES, MEASUREMENTS, AND PROPERTIES, MCGRAW-HILL, NEW YORK, NY, PAGE(S) 18.01 - 18.45, ISBN: 978-0-07-047974-6, XP000577329**
- **YU TEREBIZH V: "New designs of survey telescopes", ASTRONOMISCHE NACHRICHTEN, AKADEMIE VERLAG, BERLIN, DE, vol. 332, no. 7, 23 August 2011 (2011-08-23), pages 714 - 742, XP071024535, ISSN: 0004-6337, DOI: 10.1002/ ASNA.201111576**
- **WYNNE C G ED - WOLF E: "FIELD CORRECTORS FOR ASTRONOMICAL TELESCOPES", 1 January 1961, PROGRESS IN OPTICS; [PROGRESS IN OPTICS], AMSTERDAM, NORTH HOLLAND, NL, PAGE(S) 135 - 164, XP001048557**

EP 4 609 255 B1

• "Astronomical Optics", 1 January 1987, ACADEMIC PRESS, INC., ISBN: 978-0-12-629805-5, article SCHROEDER DANIEL: "Astronomical Optics", pages: 134 - 138, XP055897652

**Description**

**Domaine technique**

L'invention concerne un télescope de Schmidt.

Elle trouve des applications dans le domaine de l'observation ou de la surveillance spatiale, notamment pour détecter, des objets spatiaux de faibles tailles, tels que des nanosatellites ou des débris présents dans l'espace, depuis une station terrestre (première application) ou depuis un satellite dans l'espace (deuxième application).

Ainsi, l'invention concerne également une station d'observation terrestre et un satellite, chacun comprenant ledit télescope pour détecter de tels objets. L'invention concerne en outre un procédé de détection associé la station terrestre ou au satellite comprenant le télescope.

Dans l'espace, les satellites évoluent dans un environnement comprenant une densité sans cesse croissante d'objets spatiaux, tels que des satellites ou des débits spatiaux. Les débris spatiaux proviennent d'objets envoyés par l'Homme dans l'espace. Ces débits sont notamment constitués par des fragments ou pièces de satellites s'étant détachés, par exemple, à la suite de collisions entre des satellites ou entre un satellite et des débris spatiaux, en encore entre des débris spatiaux eux-mêmes. La taille de ces débris peut être faible, par exemple de l'ordre de 10 cm, voire inférieure à 10 cm de diamètre. La plupart des débris spatiaux orbitent autour de la Terre, essentiellement à une distance comprise entre 1000 et 1500 km mais également au niveau des orbites géostationnaires à environ 36 000 km.

La présence de débris spatiaux et/ou de nanosatellites à proximité d'un ou plusieurs satellites doit pouvoir être détectée pour prévenir d'éventuelles collisions, susceptibles d'endommager ou de détruire les satellites. En fonction de l'application visée, une telle détection doit pouvoir être réalisée depuis une station terrestre ou depuis un satellite dans l'espace.

A cet effet, il existe un besoin de disposer d'un télescope capable d'imager avec une qualité optique suffisamment élevée pour détecter des objets spatiaux de faible taille.

**Etat de la technique**

Parmi l'ensemble des télescopes connus, le télescope de Schmidt est celui qui est le plus prometteur pour répondre à ce besoin. Il est généralement utilisé pour observer l'espace depuis la Terre.

Selon une variante de réalisation, ce télescope comprend, alignés sur un même axe optique, un miroir concave (e.g. sphérique), un correcteur de sphéricité configuré pour corriger l'aberration sphérique due au miroir et un correcteur de champ.

Le correcteur de champ est prévu pour aplanir le champ en sortie du télescope, de manière à pouvoir utiliser des photodétecteurs planaires. Le correcteur de champ est disposé entre le miroir concave et le correcteur de sphéricité.

Le correcteur de sphéricité est prévu pour corriger l'aberration sphérique également dénommées « aberrations de sphéricité » créées par le miroir sphérique et qui ont pour effet néfaste de détériorer la qualité de l'image fournie par le télescope. En pratique, une aberration sphérique se traduit par le fait que le miroir sphérique, plus généralement concave, ne focalise pas tous les rayons lumineux incidents en un unique point focal mais en une pluralité de points le long de l'axe optique. Ces aberrations se manifestent pour les rayons lumineux éloignés de l'axe optique du télescope, i.e. là où les conditions de Gauss ne s'appliquent pas, est sont donc d'autant plus prononcées que la pupille d'entrée (ou ouverture) du télescope est grande.

Dans un télescope de Schmidt conventionnel, le correcteur de sphéricité est constitué d'une lame optique à faces planes et parallèles entre elles, dite « lame de Schmidt » ou « Schmidt plate » en anglais, cette lame étant asphérisée de manière appropriée. Cette lame est placée au centre de courbure du miroir pour assurer la correction de l'aberration sphérique sur un champ étendu, ce qui a pour inconvénient que le télescope est volumineux notamment en raison d'une longueur élevée. Pour corriger l'aberration sphérique, au moins une face de la lame de Schmidt présente un profil asphérique obtenu par un procédé d'asphérisation, si bien que la lame de Schmidt est asphérique. La limitation majeure de la lame de Schmidt est que la correction apportée n'est valable que pour une seule longueur d'onde. Pour d'autres longueurs d'onde on est face à une variation chromatique d'aberration sphérique (ou sphérochromatisme).

En rapprochant le correcteur de sphéricité du miroir concave pour réduire la taille du télescope, il apparaît des aberrations principalement de la coma et de l'astigmatisme, qui ont pour effet de détériorer la résolution des images fournies, si bien que le télescope n'est pas en mesure de fournir une qualité optique d'image suffisante pour détecter des objets spatiaux de faible taille, tels que des débris spatiaux ou des nanosatellites. Il existe donc un besoin de corriger de telles aberrations au moins pour ne pas détériorer la qualité optique de l'image fournie en sortie du télescope, voire même pour augmenter la qualité optique pour permettre la détection d'objets spatiaux encore plus petits et ainsi gagner en précision.

Par la suite, la « qualité optique » désignera la capacité du télescope à concentrer des rayons lumineux issus d'un point de l'objet imagé sur la plus petite surface possible d'un capteur d'image optoélectronique ou photodétecteur, par exemple de type CCD (*Charge-Coupled Device* en anglais) ou CMOS (*Complementary Metal Oxide Semi-conductor* en anglais). Cette qualité optique reflète la pureté avec laquelle l'image d'un objet est obtenue dans le domaine optique, *i.e.* à travers les composants optiques constitutifs du télescope. En pratique, la qualité optique est limitée par le phénomène de diffraction de la lumière. Par la suite, on qualifiera la qualité optique de « haute » ou « améliorée », lorsqu'elle est proche des limites dues à la diffraction, pour concentrer la lumière incidente sur des pixels photosensibles de la taille la plus faible possible. Dans le cadre de la présente invention, on s'intéresse donc à la qualité de l'image optique avant photo-détection. Ainsi, l'invention ne concerne pas les dispositifs permettant d'améliorer la qualité d'image par des techniques numériques de traitement d'image après photo-détection.

Par ailleurs, pour observer l'espace, la pupille d'entrée du télescope par laquelle entrent les rayons lumineux en provenance des objets à imager doit avoir un diamètre suffisamment élevé pour capter un nombre de photons suffisant, de manière à détecter le plus rapidement possible des objets les moins lumineux. Ainsi, plus la pupille d'entrée est grande, plus le télescope est apte à détecter des objets de faible taille, tels que des débris de satellites ou des nanosatellites.

Pour accroître la résolution des images fournies, le télescope doit avoir un pouvoir de résolution (ou pouvoir séparateur) suffisamment élevé pour distinguer deux points les plus proches. Plus la résolution est élevée, plus les objets spatiaux détectés pourront être de faible taille. De manière connue, le pouvoir de résolution dépend directement de la taille de la pupille d'entrée et plus précisément du diamètre d'ouverture de l'optique utilisée. Ainsi, la résolution d'un télescope est définie pour une ouverture de l'optique donnée. Plus l'ouverture est grande (e.g. 100, 200, 400 mm), plus la résolution est fine (e.g. 0,5, 0,25, 0,125 arcsec en lumière visible).

En outre des contraintes optiques, le télescope doit également répondre à des contraintes mécaniques en termes de poids et de compacité, ces contraintes étant plus ou moins fortes en fonction de l'application visée.

Par exemple, des contraintes plus fortes s'appliquent dans le cas de la deuxième application, où le télescope doit pouvoir être intégré dans un satellite le plus facilement possible et de façon économique. Dans ce cas, le télescope doit disposer d'un compromis entre son poids, son volume et son inertie qui soit suffisamment avantageux pour pouvoir être embarqué dans un satellite.

L'encombrement du télescope est essentiellement déterminé par son diamètre d'ouverture (hauteur) et sa distance focale (longueur). Lorsque le télescope est destiné à être embarqué dans un satellite, l'inertie du télescope doit être limitée. Celle-ci est d'autant plus élevée que le télescope est volumineux. Plus précisément, l'inertie est fonction du cube de la longueur du télescope.

Ainsi, un télescope de Schmidt conventionnel dont la longueur est typiquement égale au rayon du miroir et qui serait embarqué dans un satellite présenterait une inertie qui pénaliserait fortement le satellite en termes de consommation électrique et/ou de consommation en carburant, dans la mesure où le satellite est alimenté en énergie pour lui faire effectuer des micro-propulsions, par exemple pour permettre des prises de vue en orbite avec des poses longues nécessitant de faire basculer le satellite pour compenser sa rotation autour de la terre.

En ce qui concerne la première application, bien que la compacité du télescope ne soit pas une contrainte critique, elle est également souhaitable, notamment pour améliorer l'agilité du télescope dans ses déplacements, par exemple pour scanner le ciel plus rapidement. De manière générale, le télescope dispose d'un diamètre d'ouverture compris entre 5 cm et 80 cm. En ce qui concerne la deuxième application la plus contraignante en terme de compacité, il peut être optimal de limiter le diamètre d'ouverture, idéalement à des valeurs comprises entre 20 cm et 30 cm, correspondant typiquement à la charge utile de nanosatellites, et avec un poids qui ne doit pas dépasser une dizaine de kilogrammes.

De multiples adaptations du télescope de Schmidt ont été proposées jusqu'à présent dans la littérature scientifique et techniques. Parmi toutes ces adaptations, les variantes du correcteur de sphéricité les plus pertinentes vis-à-vis de la présente invention vont à présent être passées en revue.

Selon une première variante, la lame de Schmidt est remplacée par deux lentilles sphériques de puissances opposées, formant ainsi un correcteur dit « de Houghton ».

On rappelle qu'une lentille sphérique est un élément optique constitué d'un matériau vitreux caractérisé par un indice de réfraction n et compris entre deux surfaces sphériques, *i.e.* présentant chacune un profil correspondant à celui d'une sphère selon un rayon de courbure respectif R1, R2 et présentant une puissance optique $\varphi$ non nulle exprimée comme suit (Eq. 0): $\varphi=1/f' =(n-1)(1/R1 -1/R2)$ où f' désigne la longueur focale de la lentille.

Dans le correcteur de Houghton, les deux lentilles sphériques sont formées d'un même verre d'indice de réfraction n et présentent des puissances optiques opposées, si bien que la puissance optique paraxiale cumulée du correcteur est nulle, comme dans le cas d'une lame de Schmidt.

Le correcteur de Houghton a pour inconvénient que les fortes puissances individuelles et cambrures de chacune des lentilles sphériques contribuent à corriger seulement partiellement l'aberration sphérique et de coma dans le champ de vision du télescope qui est réduit ainsi qu'à travers un domaine spectral limité. En outre, ces lentilles ne conviennent pas pour corriger les aberrations d'astigmatisme dues spécifiquement au rapprochement du correcteur de sphéricité par rapport au miroir. Par ailleurs, en fonction du diamètre d'ouverture du télescope, ces lentilles peuvent être volumineuses et lourdes, ce qui ne permet pas d'optimiser ni la taille ni le poids du télescope.

Selon une deuxième variante, la lame de Schmidt est remplacée par un correcteur dit de « Baker Nunn ». Ce correcteur est constitué d'un triplet de trois lentilles asphériques placées au centre de courbure du miroir sphérique. Toutefois, en raison du nombre élevé de lentilles et de l'éloignement élevé entre ces lentilles et le miroir, ce correcteur de sphéricité n'est pas non plus adapté pour réduire le volume et la taille du télescope.

Selon une troisième variante de réalisation, la lame de Schmidt est remplacée par un doublet de lames du type Schmidt, réalisées en deux verres différents, chacune ashérisée en fonction des propriétés du verre constituant chaque lame, et toujours placées au centre de courbure du miroir. Toutefois, celles-ci ne sont pas adaptées pour réduire la taille du télescope, compte-tenu de l'éloignement toujours élevé des lames par rapport au miroir. Comme décrit précédemment, le rapprochement de ce doublet de lames achromatiques du miroir aurait pour inconvénient de provoquer l'apparition d'aberrations optiques.

L'inventeur a constaté qu'aucune des variantes du correcteur de sphéricité décrites ci-dessus ne permet au télescope de fournir une qualité optique suffisante sur un large champ de vision ainsi qu'à travers domaine spectral étendu et pour un encombrement axial significativement inférieur au rayon de courbure du miroir principal.

Un paramètre qui peut être utilisé pour estimer la qualité d'une image est la dimension moyenne de la tache image sur l'ensemble du champ de vision, par exemple égal environ égal à 6° pour le télescope selon l'invention. Par la suite, le champ de vision, ou *field of view* (FOV) en anglais, désignera l'angle de vision maximal du télescope de part et de d'autre de son axe optique, exprimé en degrés (°), minutes (') et secondes (") d'arc (1°=60'=3600").

Par ailleurs, ayant constaté que les télescopes de Schmidt les plus performants présentent un nombre d'ouverture N au mieux égal 2,2 et qu'il n'est pas possible d'atteindre des nombres d'ouverture inférieurs à cette valeur limite notamment en raison des aberrations optiques qui en résultent, l'inventeur s'est donc intéressé à réduire le nombre d'ouverture, pour un champ de vision de 6° ou plus, tout en veillant à optimiser la compacité maximale et le domaine spectral le plus étendu possible.

Par définition, le nombre d'ouverture N désigne le rapport de la longueur (ou distance) focale F du télescope sur l'ouverture D du télescope, tel que N=F/D. En pratique, l'ouverture D correspond au diamètre de la pupille d'entrée du télescope. La pupille d'entrée désigne la surface optique limitante par laquelle la lumière pénètre dans le télescope. Ce nombre d'ouverture N est souvent noté « f/N » et communément désigné « rapport focal » (ou *focal ratio* en anglais).

Par ailleurs, le nombre d'ouverture N détermine la quantité de lumière reçue sur un capteur placé au niveau du plan image du télescope. Ainsi, ce nombre d'ouverture N caractérise également la rapidité d'acquisition d'images. En effet, plus le nombre d'ouverture N est faible, plus le temps d'exposition requis est faible et par conséquent plus l'acquisition est rapide. Inversement, plus le nombre d'ouverture N est élevé, plus le temps d'exposition requis est long et plus l'acquisition est lente.

Aucune des variantes de l'art antérieur décrites ci-dessus ne permet de fournir au télescope un nombre d'ouverture N inférieur à 2 permettant notamment d'atteindre une compacité et/ou une rapidité d'acquisition d'image accrues, tout en disposant d'une qualité optique suffisante pour détecter des objets spatiaux de faible taille, tels que des débris spatiaux ou des nanosatellites se déplaçant à des vitesses très élevées, depuis une station terrestre ou depuis un satellite dans l'espace.

A cet égard, l'inventeur a constaté qu'un correcteur de sphéricité de type Houghton ne convient pas, non seulement car il ne permet pas de corriger suffisamment les aberrations mais également car il ne permet pas au télescope d'atteindre un nombre d'ouverture N suffisamment faible, notamment pour réduire la taille, le poids et/ou le temps d'acquisition du télescope.

En effet, l'inventeur a constaté qu'en cherchant à réduire le nombre d'ouverture N à des valeurs inférieures à 2, le correcteur de sphéricité du télescope (lame de Schmidt ou ses alternatives décrites ci-avant) n'est pas optimal pour l'application visée, dans la mesure où il ne permet pas de corriger pleinement les aberrations de chromaticité, d'aberration sphérique et de ses variations chromatiques, de coma et d'astigmatisme résiduels et d'ordre élevé dues par le correcteur de sphéricité lui-même, à travers l'intégralité du champ de vue du télescope et sur une large bande spectrale (e.g. entre 450 nm et 900 nm).

L'apparition de ces aberrations optiques a pour inconvénient de détériorer la qualité optique des objets imagés par le télescope. Une telle détérioration de la qualité optique est d'autant plus critique que la taille des objets spatiaux à imager est faible. L'inventeur a donc cherché à développer une solution pour corriger tout ou parties des aberrations optiques résiduelles mentionnées ci-dessus, de manière à pouvoir réduire le nombre d'ouverture sans détériorer la qualité d'image.

Idéalement, une telle correction vise à faire en sorte que chaque point de l'objet à imager corresponde dans l'image fournie par le télescope à un point image unique identique au point de l'objet pour une qualité d'image parfaite. En pratique, l'image d'un point n'est pas un point mais une tache, notamment en raison des aberrations optiques, telles que l'aberration chromatique et les aberrations sphérique, de coma, d'astigmatisme, d'ordre élevé qui subsistent au niveau des correcteurs de sphéricité des télescopes de l'art antérieur. Plus précisément, la qualité optique est limitée par la diffraction, selon laquelle un point est imagé par une tâche d'Airy, mais celle-ci est dégradée par des aberrations optiques et de champ (e.g. chromaticité, coma, sphéricité) introduites par le télescope.

Autrement dit, un des objectifs de l'invention est de limiter efficacement les aberrations résiduelles de la façon la plus simple possible dès lors qu'on réduit le nombre d'ouverture à des valeurs inférieures à 2, i.e. en faisant en sorte de réduire le plus possible la taille des tâches de chaque point image, afin qu'elles soient assimilables le plus possibles à des points et ainsi contribuer à une qualité optique accrue des images fournies. La taille de ces taches doit être la plus faible possible dans la limite de la diffraction afin de pouvoir y détecter des débris spatiaux de la plus petite taille possible.

Bien qu'il existe des télescopes de Schmidt dont le nombre d'ouverture est inférieur à 3, ce nombre ne peut descendre en-dessous de 2,2 sans être confronté aux inconvénients précités. Par exemple, pour un nombre d'ouverture égal à la limite connue de 2,2, le télescope de Schmidt, quelle que le soit la variante utilisée pour correcteur de sphéricité, ne permet pas de corriger suffisamment les aberrations résiduelles pour atteindre une qualité optique d'image suffisante, et par ailleurs sur un domaine spectral trop limité (e.g. ne permettant pas d'inclure notamment un domaine IR et/ou UV proche du visible).

Dans un article intitulé « On the capabilities of survey of telescopes of moderate size » publié dans The Astronomical Journal, 152 :121, 2016 November, V. Yu Terebizh passe en revue différentes conceptions de télescopes utilisées pour la surveillance spatiale depuis le sol. Toutefois, aucune de ces conceptions ne permet de réduire le nombre d'ouverture du télescope sans détériorer la qualité optique des images fournies, pour pouvoir détecter des débris spatiaux.

Par ailleurs, ces conceptions ne sont pas adaptées pour embarquer un télescope selon la deuxième application au moins pour les raisons suivantes.

Certaines conceptions proposées par V. Yu Terebizh utilisent des miroirs de Mangin ainsi que de grandes lentilles sphériques correctrices qui posent de sérieux problèmes en cas d'embarquement dans un satellite en orbite. Les miroirs de Mangin sont volumineux et les lentilles sphériques à forte puissance optique sont relativement lourdes. Les autres éléments optiques décrits par Terebizh ainsi que les structures destinées à les maintenir sont relativement lourds. De plus, les variations d'indice du verre constituant le miroir Mangin sont une source importante de variation chromatique des aberrations. En outre, sous l'effet des variations de température, la sensibilité thermique de telles lentilles correctrices (coefficient de dilatation du verre) lourdes et de grandes tailles associées au miroir peut induire une défocalisation de l'image au foyer du télescope et une perte de qualité des images fournies par le télescope.

En outre, les rayons solaires reçus par le télescope ont généralement pour effet de solariser les matériaux induisant alors une perte de transmission optique au cours du temps directement liée à l'épaisseur de ces lentilles. A cet égard, des lentilles sphériques, telles que mises en œuvre dans un correcteur de Houghton, ne sont pas adaptées.

Enfin, les composants sont naturellement déformés sous l'effet de leur poids (gravité), ce qui a pour effet de biaiser les mesures et les alignements réalisés au sol, avant le lancement du satellite dans l'espace. Ces déformations sont d'autant plus prononcées que les composants du télescope embarqué dans un satellite sont lourds. A cet égard, des lentilles sphériques, telles qu'utilisées dans un correcteur de Houghton, ne sont pas adaptées. Des télescopes conventionnels comme décrits ci-dessus sont divulgués dans la publication de YUDIN ALEXEY N ET AL: "Fast catadioptric telescopes for CCD observation of transient events and space surveillance",OPTICAL COMPLEX SYSTEMS: OCS11, SPIE, 1000 20TH ST. BELLINGHAM WA 98225-6705 USA, vol. 8172, no. 1, 22 septembre 2011, pages 1-10, dans la publication de JONES: "REFLECTIVE AND CATADIOPTRIC OBJECTIVES", 1 janvier 1995, HANDBOOK OF OPTICS, VOLUME II, DEVICES, MEASUREMENTS, AND PROPERTIES, MCGRAW-HILL, NEW YORK, NY, PAGE(S) 18.01 - 18.45, dans la publication de YU TEREBIZH V: "New designs of survey telescopes",ASTRONOMISCHE NACHRICHTEN, AKADEMIE VERLAG, BERLIN, DE, vol. 332, no. 7, 23 août 2011, pages 714-742, dans la publication de WYNNE: "FIELD CORRECTORS FOR ASTRONOMICAL TELESCOPES", 1 janvier 1961, PROGRESS IN OPTICS; [PROGRESS IN OPTICS], AMSTERDAM, NORTH HOLLAND, NL, PAGE(S) 135 - 164, dans la publication de Schroeder Daniel: "Astronomical Optics"In: "Astronomical Optics", 1 janvier 1987 (1987-01-01), Academic Press, Inc.,pages 134-138 et dans le document WO 01/59488 A1.

**Problème technique**

Au vu de ce qui précède, il est souhaité de prévoir un télescope qui permette de s'affranchir d'au moins une partie des problèmes et inconvénients des télescopes de Schmidt de l'art antérieur précités.

En particulier, un problème technique que propose de résoudre la présente invention est de réduire le nombre d'ouverture d'un télescope de Schmidt, sans détériorer la qualité d'image optique fournie, au mieux en l'améliorant, de sorte que la qualité d'image soit suffisamment élevée pour détecter des débris spatiaux et/ou des nanosatellites (i.e. qualité optique proche des limitations dues à la diffraction) sur un grand champ de vision (e.g. supérieur à 2°, de préférence supérieur à 5°, idéalement de l'ordre de 6°) et dans un large spectre optique (e.g incluant le domaine du visible et le domaine de l'infrarouge (IR) proche du visible et/ou le domaine d'ultraviolet (UV) proche du visible).

**Solution technique**

L'invention est définie par les revendications. En réponse à ce problème technique, il est donc proposé un

télescope de Schmidt compact et à performances optiques hautement améliorée. Ce télescope configuré pour former une image dans un plan focal, comprenant un miroir concave qui n'est pas un miroir de Mangin, un correcteur de sphéricité adapté à corriger l'aberration sphérique du miroir concave, un correcteur de champ comprenant une surface d'entrée optique, le miroir concave, le correcteur de sphéricité et le correcteur de champ étant centrés sur un même axe optique du télescope.

Le correcteur de sphéricité comprend deux lentilles asphériques telles que :

- chaque lentille asphérique comprend deux faces, dont l'une au moins est courbe et dont l'une au moins présente un profil asphérique,
- chaque lentille asphérique présente une variation d'épaisseur maximale entre un centre et un bord de ladite lentille, comprise entre 1 % et 5%, de préférence entre 1% et 3%, d'un diamètre de ladite lentille ;
- les deux lentilles asphériques sont composées d'un verre optique différent de manière à former un doublet achromatique, de préférence de type Flint-Crown ;
- les deux lentilles asphériques présentent un trou central centré sur l'axe optique et dans lequel est placé le correcteur de champ ;
- les deux lentilles asphériques sont placées entre :

  • un premier plan situé à une première distance du plan focal du télescope en s'éloignant du miroir concave ; et
  • un deuxième plan situé à une deuxième distance de la surface d'entrée optique du correcteur de champ en se rapprochant du miroir concave,

où les première et deuxième distances sont égales à 1/10 d'une distance séparant le miroir concave du plan focal du télescope ;

En outre, le télescope selon l'invention est configuré de sorte qu'il présente un nombre d'ouverture inférieur ou égal à 2, de préférence inférieur ou égal à 1,5 ou 1,3.

Le caractère asphérique des deux lentilles du correcteur de sphéricité selon l'invention permet avantageusement de corriger conjointement les aberrations chromatiques et les aberrations d'ouverture du télescope, telles que l'aberration sphérique et l'aberration chromatique axiale et le sphérochromatisme.

Les deux lentilles asphériques ont pour effet de créer un front d'onde optique asphérique et achromatique en sortie correcteur de sphéricité, si bien que l'aberration sphérique est corrigée sur un domaine de longueurs d'onde étendu par rapport au cas où les lentilles ne seraient pas asphériques.

En raison de leur courbure et de leur caractère asphérique, le volume et la masse de chaque lentille asphérique peuvent être avantageusement réduits par rapport à ceux d'une lentille sphérique qui disposerait de deux faces sphériques.

Par conséquent, la puissance optique paraxiale de chacune des deux lentilles asphériques est non nulle, contrairement au doublet de lames de Schmidt. En outre, cette puissance optique est réduite par rapport à celle des lentilles sphériques typiques d'un doublet de Houghton, notamment en raison du profil asphérique, qui vient se combiner à la variation d'épaisseur maximale contrainte. Ainsi, l'ensemble formé par les deux lentilles asphériques du télescope selon l'invention permet de bien mieux s'affranchir des aberrations optiques rencontrées avec un correcteur de Schmidt conventionnel ou avec un correcteur de Houghton conventionnel.

Ainsi, les deux lentilles asphériques présentent une faible puissance optique paraxiale et un volume et un poids limités.

De manière surprenante, les deux lentilles asphériques de verres différents ont pour effet de corriger, non seulement les aberrations de chromatisme, en particulier le long de l'axe optique, sur toute la longueur focale du télescope mais également de corriger la variation chromatique de l'aberration sphérique, si bien que la correction due au caractère asphérique des lentilles est invariante à la longueur d'onde. Ainsi, la combinaison achromatique des asphérisations faites dans deux verres de type différents, par exemple Crown et Flint, ajoute un effet multiplicateur par rapport au cas de lentilles asphériques réalisées dans un même verre. Ceci permet avantageusement de réduire le nombre d'ouverture tout en élargissant le domaine spectral à travers lequel la correction est effectuée.

Par conséquent, l'utilisation de deux verres différents pour former les deux lentilles asphériques rend parfaitement achromatique les corrections des aberrations notamment sphériques, réalisées par l'ensemble des deux lentilles achromatiques, à un niveau de correction encore jamais atteint par les différentes variantes du télescope de Schmidt de l'art antérieur, si bien que la qualité optique de l'image fournie est améliorée.

Contrairement à une lame de Schmidt asphérisée, le front d'onde asphérique généré par les deux lentilles asphériques composées de verres différents ne varie pas en fonction de la longueur d'onde, permettant ainsi une correction des aberrations et par conséquent une amélioration de la qualité optique sur une bande spectrale étendue par rapport à l'art antérieur, pouvant couvrir le domaine visible et l'infrarouge (IR) proche du visible et/ou l'ultraviolet (UV) proche du visible.

De tels effets ne peuvent pas non plus être atteints par un doublet de Houghton de l'art antérieur étant donné que les lentilles de ce doublet sont sphériques et qu'elles sont constituées d'un même verre optique.

De manière surprenante, l'inventeur a constaté que la sélection de verres différents, par exemple de type Crown et Flint respectivement, pour les deux lentilles du correcteur de sphéricité prise en combinaison avec le caractère asphérique des lentilles et leur faible variation d'épaisseur permet en combinaison d'augmenter la qualité optique d'image dans une large bande de fréquences optiques de fonctionnement du télescope, tout en corrigeant les diverses aberrations de chromatisme, sphérique et/ou coma résiduelles, jusque dans des ordres supérieurs et sur un large champ de vision.

Selon un principe de l'invention, les deux lentilles forment ainsi un doublet dit « asphéro-achromatique » de faible puissance optique paraxiale permettant au télescope d'atteindre un pouvoir de résolution plus élevé tout en réduisant les aberrations optiques à travers un large domaine spectral et dans un champ de vue étendu.

Par conséquent, la combinaison de ces caractéristiques rend possible la configuration du télescope pour atteindre un tel nombre d'ouverture N inférieur à 2, voire inférieur ou égal à 1,3, ce qui est largement réduit par rapport à la valeur limite de 2,2 obtenues pour les télescopes de Schmidt le plus performants de l'art antérieur. Ainsi, le télescope selon l'invention peut atteindre une compacité et/ou une rapidité d'acquisition largement réduite par rapport à l'art antérieur.

De manière surprenante, le caractère asphérique des lentilles contribue avantageusement à corriger la coma à des ordres supérieurs ainsi que l'astigmatisme, en combinaison avec le correcteur de champ. Autrement dit, la correction de coma s'effectue conjointement par le correcteur de champ et le correcteur de sphéricité pour atteindre un niveau de correction encore jamais atteint dans les télescopes de Schmidt de l'art antérieur, notamment ceux utilisant un correcteur de Houghton.

La colocalisation du doublet asphéro-achromatique du correcteur de sphéricité et du correcteur de champ à proximité du plan focal P du télescope permet de corrigeant les aberrations optiques comme décrit ci-dessus, y compris les aberrations de champ (e.g. coma, astigmatisme, distorsion) grâce au correcteur de champ notamment. Ce positionnement du correcteur de sphéricité et du correcteur de champ permet avantageux de rendre le télescope encore plus compact et avec une faible inertie, ce qui est particulièrement avantageux lorsque le télescope est mis en orbite selon la deuxième application. Bien que les contraintes de compacité et d'inertie soient moins critiques dans le cas de la première application, un tel positionnement serait également bénéfique pour intégrer le télescope dans une station terrestre qui serait alors plus agile pour scanner le ciel.

La combinaison des caractéristiques distinctives présentées ci-dessus permet avantageusement au télescope de Schmidt d'obtenir un nombre d'ouverture inférieur à 2, de préférence inférieur à 1,5, voire inférieur à 1,3 tout en augmentant sa qualité optique de manière suffisante pour détecter des objets spatiaux de faible taille, sur un large champ de vision, e.g. de l'ordre de 6° et sur un domaine spectral étendu pouvant inclure une partie du spectre UV et/ou IR. En fonction de l'application visée, le diamètre d'ouverture D et la longueur focale F du télescope pourront être librement fixés de sorte que le nombre d'ouverture N=F/D soit inférieur à 2 ou 1,5 ou 1,3.

De façon optionnelle, chaque lentille asphérique présente une variation d'épaisseur maximale entre un centre et un bord de ladite lentille, qui est non nulle et inférieure à 5%, de préférence non nulle et inférieure à 3% d'un diamètre de ladite lentille. Plus particulièrement, cette variation d'épaisseur est comprise entre 1% et 5% du diamètre de la lentille, de préférence entre 1% et 3% dudit diamètre.

En raison de la variation d'épaisseur maximale contrainte, les deux lentilles asphériques du correcteur de sphéricité disposent d'une puissance optique paraxiale particulièrement faible. Ceci a pour effet notamment de fournir une correction du chromatisme, de l'aberration sphérique et de la coma à proximité de l'axe optique à des ordres plus élevés, permettant ainsi d'améliorer la qualité optique de l'image fournie.

Cette contrainte d'épaisseur permet avantageusement d'étendre le champ de vision du télescope à travers lequel les corrections sont effectuées, contrairement au cas des lames de Schmidt qui ne disposent pas de puissance optique, ou encore des deux lentilles sphériques de type Houghton. En effet, comme décrit précédemment, dans le cas d'un doublet de Houghton, chaque lentille dispose d'une puissance optique individuelle élevée à l'origine d'aberrations résiduelles.

Ainsi, la puissance optique résiduelle paraxiale des deux lentilles asphériques introduite par la limitation de leur variation d'épaisseur permet d'accroître la qualité de l'image formée par le télescope dans son plan focal, à travers l'intégralité de son champ de vision, tout en évitant l'introduction de lentilles trop épaisses et donc trop lourdes pour optimiser la compacité et le poids du télescope.

De manière surprenante, la faible puissance optique paraxiale des deux lentilles telle que décrite ci-dessus combinée à leur caractère asphérique permet de corriger conjointement l'aberration de chromatisme axial, l'aberration sphérique et la coma. Combinées au correcteur de champ, ces deux lentilles asphériques permettent d'atteindre une correction optique totale remarquable.

En particulier, l'inventeur a constaté que cette combinaison de caractéristiques (i.e. asphéricité et faible variation d'épaisseur des lentilles) a pour effet d'améliorer sensiblement des aberrations optiques principalement chromatiques et d'ouverture (i.e. aberrations sphériques et chromatisme axial) à des ordres supérieurs, notamment à des nombres d'ouverture inférieurs à 1,5 et plus particulièrement inférieurs à 1,3.

De tels effets ne peuvent nullement être obtenus par les correcteurs de sphéricité connus de l'art antérieur, notamment ceux utilisant une ou plusieurs lames de Schmidt (asphérisées ou pas) ou des lentilles de Houghton.

Une difficulté majeure qui a été surmontée avec succès par l'inventeur est d'avoir réussi à trouver une solution répondant précisément à l'ensemble des contraintes optiques et mécaniques précitées.

De manière optionnelle, pour au moins l'une des deux lentilles asphériques,

- l'une des deux faces est courbe, de préférence de forme sphérique et l'autre des deux faces présente un profil asphérique ; ou

- au moins l'une des deux faces est courbe et présente en outre un profil asphérique.

De façon optionnelle, le télescope selon l'invention peut en outre comporter toutes ou parties des caractéristiques suivantes prises seules ou en combinaison :

- le nombre d'ouverture N=F/D n'est pas égal à 1,31, plus particulièrement le diamètre d'ouverture D n'est pas égal à 190 mm et la distance focale F n'est pas égale à 250 mm ; et

- le correcteur de champ comprend un ensemble d'au moins deux lentilles configurées pour convertir un champ optique courbe en sortie du miroir concave en un champ optique planaire et pour corriger l'aberration de coma et l'aberration d'astigmatisme du télescope ;

- le correcteur de champ comprend en outre au moins une lentille additionnelle configurée pour autoriser la correction de la distorsion ;

- au moins une lentille du correcteur de champ est asphérique ;

- les lentilles du correcteur de champ sont composées d'un même verre optique ;

- le miroir concave est sphérique ;

- le miroir concave est asphérique ;

- le télescope est configuré pour fonctionner dans un domaine spectral visible et un domaine spectral infrarouge et/ou un domaine ultraviolet, selon l'application visée ;

- le télescope comprend en outre un capteur optique positionné dans le plan focal du télescope en vis-à-vis du correcteur de champ.

L'invention concerne également un satellite comprenant un télescope selon l'invention tel que décrit ci-avant, en particulier pour la détection de débris spatiaux et/ou de nanosatellites depuis l'espace selon la deuxième application.

L'invention concerne également une station terrestre comprenant un télescope selon l'invention tel que décrit ci-avant, en particulier pour la détection de débris spatiaux et/ou de nanosatellites depuis la Terre selon la première application.

L'invention concerne également un procédé de détection d'au moins un objet spatial, tel qu'un débris spatial ou un nanosatellite, comprenant les étapes suivantes :

- fourniture d'un télescope selon l'invention dans un satellite ou dans une station terrestre ;

- acquisition d'au moins une image par le télescope;

- détection dudit au moins un objet spatial par traitement de ladite au moins une image.

L'invention sera mieux comprise à l'aide de la description qui va suivre, donnée uniquement à titre d'exemple et faite en se référant aux dessins annexés dans lesquels :

[Fig. 1] la figure 1 est une vue schématique d'un télescope selon un premier mode de réalisation de l'invention ;

[Fig. 2] la figure 2 est une vue schématique du correcteur de sphéricité mis en œuvre dans le télescope de la figure 1 ;

[Fig. 3] la figure 3 illustre schématiquement une lentille asphérique;

[Fig. 4] la figure 4 est un vue schématique d'un télescope selon un deuxième mode de réalisation de l'invention ;

[Fig. 5] la figure 5 illustre schématiquement un satellite dans lequel est embarqué le télescope selon la figure 4 ;

[Fig. 6] la figure 6 illustre sous forme d'organigramme un procédé de détection de débris spatiaux et/ou de nanosatellites ; et

[Fig. 7] la figure 7 illustre schématiquement une station terrestre comprenant le télescope selon la figure 4 ;

[Fig. 8] La figure 8 est un schéma en coupe d'un télescope de l'art antérieur de type Schmidt ;

[Fig. 9] La figure 9 montre un premier aspect du comportement optique du télescope de la figure 8 ;

[Fig. 10] La figure 10 montre un deuxième aspect du comportement optique du télescope de la figure 8 ;

[Fig. 11] La figure 11 est un schéma en coupe d'un télescope de l'art antérieur de type Sonnefeld ;

[Fig. 12] La figure 12 montre un premier aspect du comportement optique du télescope de la figure 11 ;

[Fig. 13] La figure 13 montre un deuxième aspect du comportement optique du télescope de la figure 11 ;

[Fig. 14] La figure 14 est un schéma en coupe d'un télescope conforme à l'invention ;

[Fig. 15] La figure 15 montre un premier aspect du comportement optique du télescope de la figure 14 ;

[Fig. 16] La figure 16 montre un deuxième aspect du comportement optique du télescope de la figure 14 ;

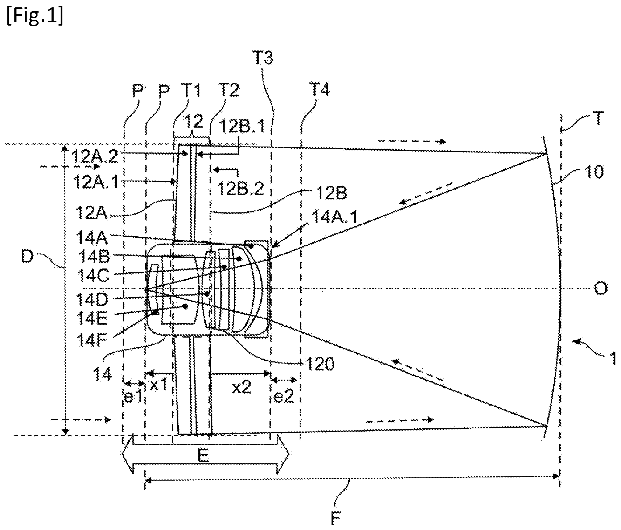

Un télescope selon un premier mode de réalisation de l'invention va à présent être décrit en référence à la **figure 1.**

Le télescope 1 comprend un miroir concave 10, un correcteur de sphéricité 12 adapté à corriger au moins des aberrations optiques sphériques dues au miroir concave 10, un correcteur de champ 14 (*field flattener* en anglais) adapté à convertir le champ réfléchi par le miroir concave 10 en un champ planaire.

Chacun des éléments constitutifs du télescope 1, y compris le miroir 10, le correcteur de sphéricité 12 et le correcteur de champ 14, est centré sur l'axe optique O du télescope 1, si bien que tous ces éléments sont alignés le long de ce même axe optique O.

Ainsi, la structure du télescope 1 est simple à mettre en œuvre et présente une grande facilité d'alignement optique. Cette configuration convient particulièrement à la deuxième application étant donné qu'elle dispose d'une bonne propension à demeurer stable et robuste face aux perturbations mécaniques qui peuvent se produire durant le lancement du satellite ainsi et face aux conditions thermiques lorsque le satellite est en orbite.

Quelle que soit l'application visée, le télescope 1 est particulièrement bien adapté pour former les images de débris de satellites, de nanosatellites ou de tous autres objets spatiaux projetés ou visualisés dans un plan focal P situé en amont du correcteur de sphéricité 12 par rapport aux rayons incidents.

Sur la figure 1, le sens de propagation des rayons est représenté par des flèches en trait pointillé. Pour chaque élément optique, les termes « entrée » et « sortie » sont relatifs au sens de propagation des rayons.

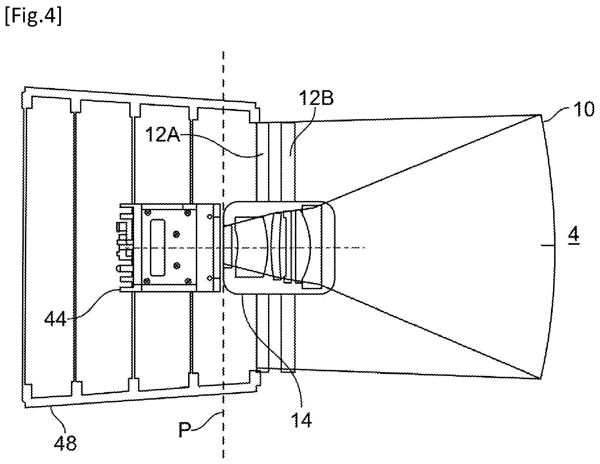

Par définition, le plan focal P du télescope 1 est le plan dans lequel se forme une image destinée à être captée en sortie du télescope. En pratique, le plan focal P est matérialisé par la présence d'un capteur optique pour capter une telle image, telle qu'une caméra comme illustrée dans le mode de réalisation de la figure 4.

Par « miroir concave », on comprendra que le miroir présente une surface de réflexion courbée et creuse vue du correcteur de sphéricité 12, de sorte que les rayons incidents en provenance du correcteur de sphéricité 12 sont réfléchis en direction de ce dernier. Autrement dit, le miroir concave 10 fait converger les rayons incidents en direction du correcteur de sphéricité 12, vers son foyer optique.

Dans le présent exemple, le miroir concave 10 est un miroir sphérique, c'est-à-dire que sa surface de réflexion (ou réfléchissante) forme une calotte sphérique caractérisée par un rayon de courbure (non représenté).

Toutefois, dans d'autres modes ou variantes de réalisation (non illustrés), le miroir concave pourra être un miroir asphérique, c'est-dire que sa surface réfléchissante est courbe mais n'épouse pas la forme d'une sphère. Par exemple, c'est le cas des miroirs dont la forme de la surface de réflexion est sélectionnée parmi un hyperboloïde, une paraboloïde, une ellipsoïde, une ellipsoïde aplati au sommet.

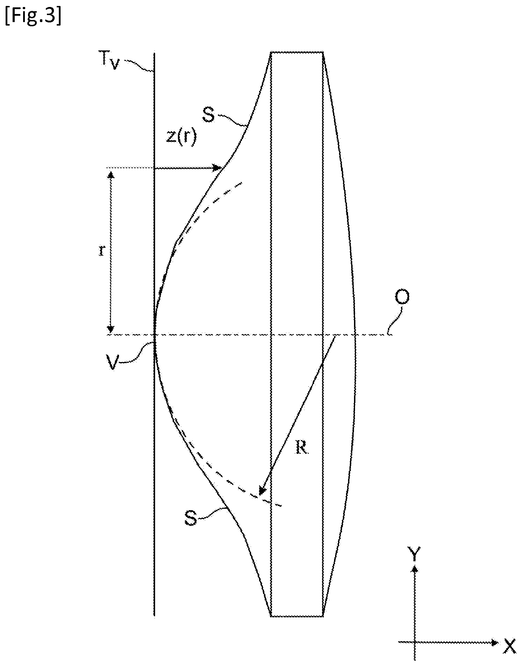

Dans une variante de réalisation (non illustrée), la surface du miroir concave 10 est asphérisée ou déformée selon des puissances optiques croissantes de la distance du point de la surface par rapport à l'axe optique O. Le terme « asphérisé » est utilisé pour désigner toute surface optique présentant un profil asphérique, *i.e.* une surface courbe déformée de sorte qu'elle n'épouse pas le contour d'une sphère. Une définition plus précise du caractère asphérique d'une surface sera donnée ci-après en référence à la figure 3.

Une telle déformation asphérique ou asphérisation d'un miroir concave initialement sphérique pourra ainsi être avantageusement utilisée pour obtenir des images de qualité supérieure par une correction des aberrations optiques à des ordres supérieurs de façon incrémentale dans le cadre de la présente invention. En particulier, l'inventeur a démontré que l'utilisation d'un miroir asphérique (ou asphérisé) permet d'améliorer la qualité d'image du télescope de manière notable au centre du champ et d'un facteur de l'ordre de 2 au bord du champ par rapport au cas où un miroir sphérique est utilisé.

Le correcteur de sphéricité 12 est prévu pour corriger les aberrations sphériques dues au miroir sphérique 10, compte-tenu notamment de taille de la pupille d'entrée du télescope. A cet effet, il comprend deux lentilles 12A, 12B, à savoir une première lentille 12A servant de pupille d'entrée du télescope 1, par laquelle entrent les rayons lumineux incidents, suivie d'une deuxième lentille 12B.

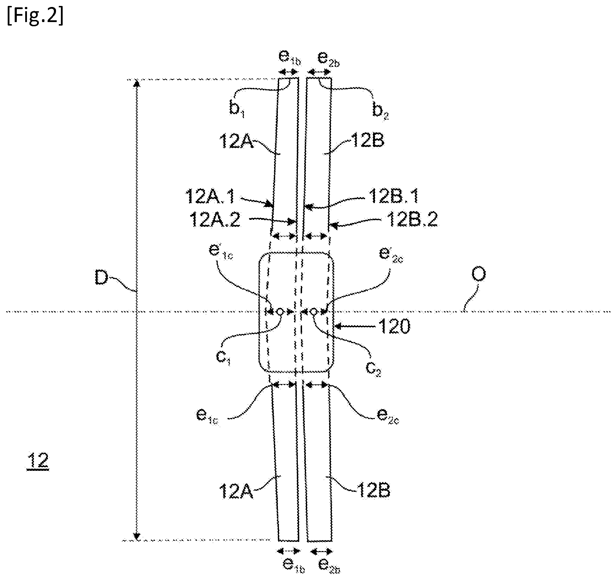

Comme illustré sur la figure 1, les lentilles 12A, 12B sont découpées (par exemple par perçage) en leur centre le long de l'axe optique O, de manière à former un trou central 120 centré sur l'axe optique O et adapté pour recevoir le correcteur de champ 14. Le correcteur de champ 14 peut être fixé à la paroi du trou central 120 ou à la structure extérieure du télescope 1 au moyen d'un dispositif d'accrochage de type « araignée » ou tout autre dispositif de fixation équivalent. Ces deux lentilles 12A, 12B seront décrites plus en détails ci-après en référence à la figure 2.

Selon l'exemple de la figure 1, le correcteur de champ 14 comprend un ensemble de six lentilles 14A, 14B, 14C, 14D, 14E, 14F configurées pour convertir un champ optique courbe fourni en sortie du miroir concave 10 en un champ optique planaire et corrigé d'une ou plusieurs aberrations optiques de champ sélectionnées parmi la coma, l'astigmatisme, la distorsion, la courbure du champ optique.

Dans le présent exemple, une première lentille 14A plano-sphérique située en entrée du correcteur de champ 14 est sélectionnée divergente. Elle est suivie d'une deuxième lentille 14B sphérique convergente. L'ensemble formé par les première 14A et deuxième 14B lentilles sphériques a pour effet de corriger la coma, l'astigmatisme et la courbure du champ optique demeurant en sortie du miroir concave 10.

Une troisième lentille 14C sphérique est prévue pour améliorer la correction des aberrations géométriques d'ordres supérieurs ainsi que les aberrations chromatiques et autoriser en outre la correction de la distorsion.

Une quatrième lentille 14D sphérique est prévue pour améliorer encore la correction des aberrations chromatiques et les aberrations géométriques d'ordres supérieurs et obtenir des taches images de l'ordre de quelques $\mu$m.

Une cinquième lentille 14E sphérique est prévue pour atteindre une correction des aberrations de très haute qualité et uniforme sur un champ de vue atteignant 6° pour une ouverture optique totale de 230 mm et un détecteur avec des pixels de 4,5 $\mu$m seulement.

Une sixième lentille 14F sphérique convergence est prévue pour accroître encore la qualité image dans le champ, dans le cas de lentilles sphériques uniquement.

Dans le présent exemple, l'ensemble des six lentilles 14A-14F permet d'améliorer sensiblement la qualité des images fournies en corrigeant des aberrations de champ (coma, achromatisme, distorsion, courbure). Ces lentilles 14A-14F sont toutes sélectionnées sphériques et composées d'un même verre optique pour simplifier la fabrication optique et uniformiser la variation chromatique des aberrations résiduelles. Il s'ensuit que la structure du télescope est simplifiée et que ses coûts de fabrication sont réduits.

Pour un nombre de lentilles donné, on pourra jouer sur différents paramètres des lentilles, tels que le caractère sphérique (rayon de courbure) ou asphérique (taux d'asphéricité), le choix du verre la constituant et son épaisseur pour améliorer encore les corrections des aberrations optiques.

Selon d'autres modes ou variantes de réalisation (non illustrés), toutes ou partie des lentilles du correcteur de champ 14 pourront être asphérisées et/ou être composées de verres différents. Ainsi, le nombre et la configuration des lentilles (i.e. nature convergente/divergente, forme sphérique/asphérique, sélection des verres) du correcteur de champ 14 pourront être ajustés en fonction des aberrations et distorsions à corriger et des performances de détection à atteindre selon les connaissances générales de l'Homme du Métier. Par exemple, le correcteur de champ 14 pourra comprendre uniquement des lentilles sphériques, ou uniquement des lentilles asphériques, ou un mélange de lentilles sphériques et asphériques.

Dès lors que les configurations du correcteur de champ 14 et du correcteur de sphéricité 12 sont sélectionnées, la distance focale F du télescope 1 et la position du plan focal P du télescope 1 sont fixées en conséquence. Le correcteur de champ 14 est alors agencé à travers le trou central 120 du correcteur de sphéricité 12, par exemple agencé au moins partiellement à l'intérieur du doublet de lentilles 12A, 12B, de manière à limiter le volume du télescope pour atteindre une compacité accrue. Le positionnement du correcteur de sphéricité 12 peut être alors ajusté en fonction du plan focal P du

téléscope et du correcteur de champ 14 comme décrit ci-dessous.

Le correcteur de champ 14 présente une surface d'entrée optique 14A.1 correspondant à la surface d'entrée de la première lentille 14A, par laquelle la lumière en provenance du miroir concave 10 pénètre dans le correcteur de champ 14 et présente une surface de sortie de laquelle la lumière sort en direction du plan focal P du téléscope 1.

Au moins l'une des surfaces des lentilles étant courbe (i.e. non planaire), on définit un plan tangent à ces surfaces et perpendiculaire à l'axe optique O pour exprimer des distances par rapport à ces surfaces comme illustré sur la figure 1, afin de définir le positionnement du correcteur de sphéricité 12.

Ainsi, on définit un plan T1 tangent à la surface d'entrée 12A.1 de la première lentille 12A, un plan T2 tangent à la surface de sortie 12B.2 de la deuxième lentille 12B du correcteur de sphéricité 12, un plan T3 tangent à la surface d'entrée 14A.1 de la première lentille 14A du correcteur de champ 14. Ainsi, les plans T1, T2, T3 sont tous perpendiculaires à l'axe optique O du téléscope 1 et par conséquent parallèles entre eux.

Le correcteur de sphéricité 12 est positionné de telle sorte qu'il soit compris entre un premier plan extrémal P' et un deuxième plan extrémal T4, ces deux plans étant également perpendiculaires à l'axe optique O. Le premier plan extrémal P' est situé à une première distance $e_1$ du plan focal P en s'éloignant du miroir concave 10. Le deuxième plan extrémal T4 est situé à une deuxième distance $e_2$ de la surface d'entrée optique 14A.1 du correcteur de champ 14 en se rapprochant du miroir concave 10. De préférence, les première $e_1$ et deuxième $e_2$ distances sont égales à 1/10 de la distance focale F du téléscope complet séparant le miroir concave 10 du plan focal P du téléscope 1.

Dans le cas idéal où la fabrication du téléscope et le positionnement de ses éléments constitutifs sont parfaitement réalisés, les première $e_1$ et deuxième $e_2$ distances sont nulles, *i.e.* $e_1=e_2=0$. Dans ce cas, le correcteur de sphéricité 12 est intégralement compris entre le plan focal P du téléscope 1 et la surface d'entrée optique 14A.1 du correcteur de champ 14. Cette condition $e_1=e_2=0$ permet de n'avoir aucun blocage optique de rayons et de bénéficier d'un aménagement d'un capteur d'images (ou photodétecteur) au plan focal qui peut s'étendre plus loin que la surface sensible du capteur.

Toutefois, en pratique, il convient de prévoir des marges d'ajustement grâce aux première $e_1$ et deuxième $e_2$ distances, si bien que les deux lentilles 12A, 12B du correcteur de sphéricité 12 sont intégralement comprises dans un espace E contenu entre les deux plans extrémaux P', T4 (lorsque $e_1 \neq 0$ et $e_2 \neq 0$) et plus particulièrement entre les plans P et T3 (lorsque $e_1=e_2=0$).

Autrement dit, pour positionner le correcteur de sphéricité 12,

-   la surface d'entrée 12A.1 de la première lentille 12A peut être écartée du miroir concave 10, d'une distance $x_1$ sans que le plan T1 ne dépasse le plan P' et plus particulièrement le plan focal P (i.e. écartement d'une distance maximale $x_1+e_1$) ; et/ou

-   la surface de sortie 12B.2 de la deuxième lentille 12B peut être rapprochée du miroir concave 10, d'une distance $x_2$ sans que le plan T2 ne dépasse le plan T4 et plus particulièrement le plan T3 (i.e. rapprochement d'une distance maximale $x_2+e_2$).

Le correcteur de sphéricité 12 du téléscope 1 va être à présent décrit plus en détails en référence à la **figure 2.**

Les deux lentilles 12A, 12B du correcteur de sphéricité 12 sont agencées en regard l'une de l'autre, perpendiculairement à l'axe optique O du téléscope 1 et centrées sur ce même axe optique O. Par exemple, les deux lentilles sont accolées l'une à l'autre, de manière monobloc pour assurer une meilleure stabilité. De préférence, elles sont séparées d'une distance minimale d'environ 1 mm pour minimiser les risques de choc lors des opérations de montage.

Dans le présent exemple, les deux lentilles 12A, 12B ont un même diamètre D définissant la taille de la pupille d'entrée du téléscope 1. Dans le présent exemple, ce diamètre D correspond au diamètre de l'ouverture du téléscope.

Dans d'autres modes de réalisation (non illustrés), les lentilles 12A, 12B pourront avoir des diamètres distincts, auquel cas la pupille d'entrée du téléscope sera définie par la lentille de diamètre le plus faible.

Selon une spécificité de l'invention, les deux lentilles 12A, 12B sont des lentilles asphériques de faible puissance optique formant un doublet achromatique, dit « doublet asphéro-achromatique » qui va être à présent décrit.

Par définition, une lentille est un composant optique présentant une variation d'épaisseur non nulle entre son centre et ses bords (ou extrémités). Ainsi, on exclura de cette définition les lames à faces planes et parallèles entre elles, telles que les lames de Schmidt, ainsi que les ménisques dont les deux faces sont courbes mais dont l'épaisseur ne varie quasiment pas entre son centre et ses extrémités. Par « courbe » ou « courbée », il faut comprendre une surface qui n'est pas planaire (ou plane).

Une surface « sphérique » présente un contour correspondant à celui d'une sphère, d'un secteur ou d'une portion d'une sphère, dont la courbure est définie par un rayon de courbure constant. Ainsi, une surface sphérique présente une courbure uniforme qui peut être convexe ou concave. Une surface sphérique est un exemple particulier de forme courbe, dans le cas où le rayon de courbure est constant. De manière générale, une surface asphérique est courbe mais non sphérique.

A cet égard, il convient de distinguer clairement une lentille d'une lame optique (dont les deux faces sont planaires) et en particulier une lame asphérique dont au moins l'une des faces est asphérisée (i.e. déformée selon un profil asphérique).

De manière générale, le profil asphérique d'une surface d'un composant optique, tel qu'une lentille ou une lame, est obtenu par application d'un procédé d'asphérisation sur une surface du composant. Cette surface peut être initialement courbe ou planaire. Ainsi, le profil asphérique résultant du procédé d'asphérisation vient en superposition d'un profil principal courbe ou planaire de la surface qui est asphérisée. Par exemple, dans le cas d'une lentille, dont au moins l'une des faces est asphérisée, le profil asphérique doit être compris par l'Homme du Métier comme venant en superposition d'un profil courbe ou plan principal.

Dans le cadre de la présente invention, on pourra sélectionner les deux lentilles du correcteur de sphéricité 12 par exemple parmi les types suivants :

- une lentille plan-convexe, c'est-à-dire comprenant une face planaire et une face courbe de forme convexe, au moins l'une de ces faces présentant un profil asphérique ;

- une lentille plan-concave, c'est-à-dire comprenant une face planaire et une face courbe de forme concave, au moins l'une de ces faces présentant un profil asphérique ;

- une lentille bi-courbe, c'est-à-dire comprenant deux faces courbes, dont au moins présente un profil asphérique ; par exemple l'une des faces est de forme sphérique, concave ou convexe et l'autre face est asphérique.

Les deux lentilles sélectionnées ne sont pas nécessairement de même type. Par exemple, on pourra associer, au sein du correcteur de sphéricité, une lentille de type plan-convexe et une lentille de type bi-courbe ; ou une lentille de type plan-concave et une lentille de type bi-courbe, ou plus généralement toute combinaison possible des types de lentilles précités.

Par contre, on exclura tout composant optique qui ne rentre pas dans la définition d'une lentille telle que fournie ci-dessus, par exemple une lentille en forme de ménisque ou une lame optique à faces parallèles (i.e. lame de Schmidt).

Par la suite, l'expression « lentille asphérique » désignera toute lentille (au sens de la définition donnée ci-avant) comprenant au moins une face asphérique (ou asphérisée), c'est-à-dire présentant un profil asphérique. La face de la lentille peut être asphérisée selon des procédés d'asphérisation connus (e.g. usinage, polissage, *etc*). Le profil asphérique va être à présent décrit plus en détails en référence à la figure 3.

La **figure 3** illustre de manière schématique une lentille asphérique, dans un repère orthonormé (X,Y) en deux dimensions, où X correspond à l'axe optique O de la lentille (ou du télescope). L'une des faces de la lentille (e.g. la face d'entrée S) est configurée selon un profil asphérique défini de manière générale par l'équation suivante (Eq. 1):

$$z(r) = \frac{r^2}{R\left(1 + \sqrt{1 - (1+k)\frac{r^2}{R^2}}\right)} + \sum_{j=2}^{n} A_j . (r^2)^j$$

- où $z(r)$ définit, selon l'axe X, la distance entre le plan $T_v$ tangent au sommet (ou vertex) V de la lentille (perpendiculairement à l'axe optique O) et la face S de la lentille en fonction de la distance radiale $r$ selon l'axe Y par rapport à l'axe optique O,

- $R$ désigne le rayon de courbure au sommet V de la lentille (correspondant au rayon de courbure d'une sphère parfaite coïncidant avec la surface de la sphère en son sommet V),

- $k$ désigne une constante de conicité, telle que k>0 pour une ellipse oblate, -1<k<0 pour une ellipse prolate, k=0 pour une sphère, k=-1 pour une parabole, k<-1 pour une hyperbole,

- $\{A_n\}$ désignent les coefficients d'une correction polynomiale d'asphéricité correspondant à des termes de déformations d'ordre supérieur n en puissances paires de $r$, où $n$ est un entier naturel supérieur à 2 (i.e. termes d'asphéricité $A_n.(r^2)^n$ ; e.g. pour n=2, $A_2.r^4$, pour n=3, $A_2.r^6$, *etc*).

Dans le cadre de la présente invention, on considère que la constante de conicité k est non nulle et/ou que les coefficients d'asphéricité $\{A_n\}$ sont non nuls, de manière à exclure tout profil sphérique de la définition d'un profil asphérique.

Ainsi, toute lentille, dont au moins une face (i.e. face d'entrée et/ou face de sortie) est façonnée selon un profil défini par l'équation 1 ci-dessus est une lentille asphérique.

Les différences d'épaisseurs entre le centre et les bords de la lentille asphérique illustrée sur la figure 3 ont été exagérées par rapport à la réalité, uniquement pour bien visualiser le caractère asphérique de la lentille sur une de ses faces. En particulier, on observe clairement que selon le profil asphérique la surface S de la lentille asphérique s'écarte de celui du profil d'une lentille sphérique tel qu'indiqué en traits pointillés.

En ajustant les paramètres définis par l'équation 1 ci-dessus, il est possible de réduire la quantité de verre utilisée pour former la lentille asphérique, dans la mesure où le rayon de courbure est réduit progressivement contrairement au cas de la lentille sphérique pour laquelle le rayon de courbure reste constant sur toute la surface pour une face donnée.

Un exemple de lentille asphérique mise en œuvre dans le correcteur de sphéricité 12 va être à présent décrit plus en détails en référence à la **figure 2.**

Selon l'exemple de la figure 2, les surfaces 12A.1, 12A.2, 12B.1, 12B.2 des lentilles asphériques 12A, 12B sont toutes courbées en direction du plan focal P du télescope 1. Dans d'autres modes de réalisation (non illustrés), d'autres orientations de ces courbures pourront être envisagées, par exemple avec des orientations différentes pour au moins deux surfaces.

Dans le présent exemple, chacune des deux lentilles 12A, 12B est asphérisée seulement sur l'une de ses deux faces, e.g. sur la face de sortie 12A.2 de la première lentille 12A et sur la face d'entrée 12B.1 de la deuxième lentille 12B. Autrement dit, seules les surfaces 12A.2, 12B.1 présentent un profil (ou contour) selon l'équation 1. Pour chaque lentille 12A, 12B, le profil asphérique peut être ajusté de manière spécifique par modification des paramètres de l'équation 1, en fonction des performances à atteindre en fonction de la nature des aberrations à corriger.

De manière générale, les deux lentilles asphériques 12A, 12B du correcteur de sphéricité 12 présentent chacune un profil asphérique sur leur surface d'entrée 12A.1, 12B.1 et/ou sur leur surface de sortie 12A.2, 12B.2, ce profil pouvant être différencié pour chacune de ces surfaces (i.e. en utilisant des paramètres distincts dans l'équation 1 ci-avant). Il suffit que chacune des deux lentilles soit asphérisée sur l'une de ses deux faces.

Les déformations apportées par les surfaces asphérisées des lentilles 12A, 12B font que l'onde lumineuse transmise compense l'aberration de sphéricité apportée par le miroir concave 10.

Comme illustré sur la figure 2, chaque lentille asphérique 12A, 12B a une épaisseur $e_{1b}$, $e_{2b}$ à ses extrémités $b_1$, $b_2$ respectivement (i.e. à une distance maximale de l'axe optique O) et une épaisseur différente $e'_{1c}$, $e'_{2c}$ en son centre $c_1$, $c_2$, i.e. épaisseur proximale le long de l'axe optique O avant le découpage de sa zone centrale pour former le trou 120 destiné à recevoir le correcteur de champ décrit en référence à la figure 1.

Les parties des lentilles asphériques 12A, 12B découpées pour former le trou 120 apparaissent en pointillé sur la figure 2. Ainsi, chaque lentille 12A, 12B a une épaisseur $e_{1c}$, $e_{2c}$ à proximité de son centre $c_1$, $c_2$, i.e. le long de l'axe optique O après découpage de sa zone centrale pour former le trou 120.

Dans le présent exemple, l'une des lentilles est plus épaisse en son centre qu'à ses extrémités si bien qu'elle est convergente tandis qu'à l'inverse, l'autre lentille est plus épaisse à ses extrémités qu'en son centre si bien qu'elle est divergente L'ordre des deux lentilles est indifférent au premier ordre.

Selon une particularité de l'invention, chacune des deux lentilles asphériques 12A, 12B présente une variation d'épaisseur maximale $\Delta e_1$, $\Delta e_2$ entre ses bords $b_1$, $b_2$ et son centre $c_1$, $c_2$ qui est non nulle et inférieure à 5% du diamètre D de la lentille, plus particulièrement inférieure à 3,33% de D ou de préférence inférieure à 3% du diamètre D, si bien que chaque lentille asphérique 12A, 12B présente une faible puissance optique paraxiale. Par exemple, cette variation d'épaisseur est comprise entre 1% et 5%, ou entre 1% et 3,33%, ou entre 1% et 3% du diamètre D.

Par exemple, cette variation d'épaisseur est déterminée, pour chaque lentille, sans tenir compte de l'asphérisation de la lentille, c'est-à-dire en faisant abstraction du profil asphérique que peut présenter la ou les faces de la lentille, tel que décrit précédemment en référence à la figure 3 selon l'équation 1. Autrement dit, il s'agit de la variation d'épaisseur avant d'asphériser l'une ou les deux faces de la lentille pour la rendre asphérique par application de tout type de procédé d'asphérisation connu.

Cette variation d'épaisseur maximale, hors asphérisation, pourra être ajustée en fonction du profil d'asphérisation des lentilles. En effet, plus le nombre d'ouverture N du télescope diminue, en particulier à des valeurs proches de 1,3 et/ou inférieures à 1,3, plus l'asphérisation des lentilles du correcteur de sphéricité devient importante et influe sur les considérations de variation d'épaisseur des lentilles.

Autrement dit, selon un exemple de l'invention, deux éléments support servent à former une asphérisations (i.e. lentilles) dont les variations d'épaisseur entre le centre et le bord sont inférieures à 5% du diamètre de ces éléments. Ainsi, l'invention se démarque des éléments support d'asphérisations connus de l'art antérieur, tels qu'une lame de Schmidt ou de tout autre support dont les faces d'entrée et de sortie sont parallèles entre elles. Cette limitation d'épaisseur pourtant sur des lentilles permet avantageusement de limiter conjointement le poids du télescope et les aberrations résiduelles qui seraient dues à une trop forte puissance optique des lentilles.

Dans le présent exemple, les deux lentilles asphériques 12A, 12B obéissent à la même condition de variation d'épaisseur maximale exprimée par l'équation suivante : $0,01 \times D < \Delta e < 0,05 \times D$ (Eq. 2), où D désigne le diamètre de la

EP 4 609 255 B1

pupille d'entrée (correspondant au diamètre de chaque lentille), $\Delta e$ correspond à $\Delta e_1$ qui désigne le module de la différence d'épaisseur entre le centre $c_1$ et l'un des bords $b_1$ de la première lentille 12A tel que $\Delta e_1=|e_{1c} - e_{1b}|$ ou $\Delta e$ correspond à $\Delta e_2$ qui désigne le module de la différence d'épaisseur entre le centre $c_2$ et l'un des bords $b_2$ de la deuxième lentille 12B tel que $\Delta e_2=|e_{2c} - e_{2b}|$. Autrement dit, l'épaisseur de chaque lentille 12A, 12B varie au maximum, entre son centre et l'un de ses bords, d'une valeur comprise entre $0,01\times D$ et $0,05\times D$. Dans le cas où les lentilles asphériques 12A, 12B ont des diamètres différents, désignés $D_1$, $D_2$ respectivement, les lentilles asphériques 12A, 12B obéiront respectivement aux relations suivantes : $0,01\times D_1 <\Delta e_1< 0,05\times D_1$ (Eq.3) et $0,01\times D_2 <\Delta e_2< 0,05\times D_2$ (Eq. 4). En pratique, les deux lentilles ont des diamètres sensiblement identiques, en particulier, $D_1=D_2=D$.

Dans certaines variantes de réalisation (non illustrées), les deux lentilles asphériques 12A, 12B pourront obéir à des conditions de variation d'épaisseur maximale différentes, dans la mesure où ces variations d'épaisseur restent inférieures ou égale à $0,05\times D$ (ou $0,05\times D_1$ ou $0,05\times D_2$ dans le cas où $D_1\neq D_2$), en particulier comprises entre $0,01\times D$ et $0,05\times D$. Ainsi, par exemple, les deux lentilles 12A, 12B pourront vérifier respectivement les équations suivantes : $0,01\times D <\Delta e_1< 0,05\times D$ avec $\Delta e_1 =|e_{1c} - e_{1b}|$ (Eq. 5) et $0, 01\times D <\Delta e_2< 0,03\times D$ avec $\Delta e_2 =|e_{2c} - e_{2b}|$ (Eq.6). Autrement dit, la variation d'épaisseur maximale de chaque lentille asphérique 12A, 12B pourra être limitée par un seuil supérieur différent pour chaque lentille (e.g. $0,05\times D$ pour l'une des lentilles et $0,03\times D$ pour l'autre), dès lors que ce seuil reste inférieur ou égal à $0,05\times D$. Toutefois, lorsque les lentilles ont le même diamètre D, il n'est pas nécessaire de différentier les seuils supérieurs. Dans d'autres exemples de réalisation, le coefficient 0,01 de la borne inférieure $0,01\times D$ pourra être réduit dès lors qu'il n'atteint pas la valeur 0.

Par exemple, au moins l'une des lentilles asphériques est épaissie en son centre, si bien qu'elle présente une épaisseur plus élevée en son centre qu'à ses extrémités, à l'instar d'une lentille convergente, comme illustré sur la figure 2, ce qui a pour effet de lui fournir une puissance paraxiale de convergence de lumière.

Dans d'autres variantes de réalisation, au moins l'une des lentilles asphériques est épaissie à ses extrémités, si bien qu'elle présente une épaisseur plus élevée à ses extrémités qu'en son centre, à l'instar d'une lentille divergente.

Dans tous les cas, la différence d'épaisseur confère à chaque lentille asphérique 12A, 12B une puissance optique paraxiale faible, par rapport à un doublet de lentilles sphériques telles qu'utilisées dans le correcteur de Houghton ou une ou deux lames de Schmidt.

Ainsi, la limitation de la variation d'épaisseur maximale telle que décrite ci-dessus permet de limiter la puissance optique paraxiale des lentilles asphériques, ce qui a pour effet de gagner en qualité à travers tout le champ de vision en sortie du miroir concave 10. En particulier, les intervalles de variation d'épaisseurs décrits ci-dessus permettent d'assurer que les corrections effectuées par le doublet de lentilles asphériques 12A, 12B soient réalisées sur un grand champ de vision, notamment par rapport au cas où un correcteur de type Houghton serait utilisé.

D'un point de vue mécanique, la limitation de la variation d'épaisseur maximale entre les bords et le centre des lentilles asphériques 12A, 12B à moins de 5%, ou de préférence à 3,33% ou 3% de leur diamètre D, a pour effet de réduire le poids et l'inertie du télescope, ce qui est particulièrement avantageux pour l'embarquer dans un satellite en orbite selon la deuxième application.

D'un point de vue optique, le doublet de lentilles asphériques 12A, 12B à faible puissance optique paraxiale tel que décrit ci-dessus permet en particulier d'améliorer la correction de chromatisme à proximité de l'axe optique, de l'aberration sphérique et de la coma, notamment par rapport au cas d'une lame de Schmidt simple ou d'un doublet de deux lentilles sphériques de type Houghton. Une telle amélioration est principalement due aux asphérisations des surfaces et à la faible puissance optique paraxiale introduite par les lentilles 12A, 12B dont la variation d'épaisseur maximale est limitée à 5% du diamètre D, de préférence à 3,33 ou 3% de D comme décrit ci-avant.

Ainsi en combinant la faible puissance optique paraxiale et le profil asphérique des deux lentilles 12A, 12B, l'inventeur a mis en évidence qu'une excellente correction des aberrations optiques principalement chromatiques et d'ouverture peut être obtenue et de manière inégalée par rapport aux télescopes de l'art antérieur, notamment à des ordres optiques supérieurs, permettant ainsi d'accroître la qualité des images à travers l'intégralité du champ de vision du télescope tout en permettant d'atteindre un nombre d'ouverture N réduit à 1,5 voire à 1,3.

Une telle réduction du nombre d'ouverture est significative par rapport à la valeur limite de 2,2 connue de l'art antérieur. Cette réduction permet non seulement de rendre plus compact le télescope mais également d'accroître la rapidité d'acquisition des images de manière significative. En particulier, un nombre d'ouverture N réduit à 1,5 permet de concentrer le flux lumineux incident sur une tache image de taille significativement réduite et ainsi de gagner en résolution et accroître la détectivité du télescope, par rapport aux télescopes de Schmidt de l'art antérieur les plus performants pour lesquels le nombre d'ouverture est limité à 2,2. Ceci est particulièrement avantageux pour détecter des objets spatiaux de taille encore plus faible et sans dégrader la qualité optique des images fournies.

En particulier, l'inventeur a constaté que l'asphéricité des lentilles du correcteur de sphéricité prise en combinaison avec la condition de variation d'épaisseur de ces lentilles selon l'invention comme décrit ci-avant a pour effet de corriger une variation chromatique de l'aberration sphérique ainsi qu'une composante de coma et d'astigmatisme résiduelle, qui se combinent avec les corrections apportées par le correcteur de champ.

Lorsque le correcteur de sphéricité est placé entre les plans P' et T4 comme décrit précédemment en référence à la figure 1, cette combinaison de caractéristiques a pour effet de corriger les aberrations sphériques, de coma, et d'astigmatisme résiduelles du télescope jusqu'à un niveau encore jamais atteint par l'art antérieur.

Les deux lentilles asphériques 12A, 12B sont en outre réalisées en deux verres différents sélectionnés de telle sorte qu'ils présentent des dispersions d'indice de réfraction en fonction de la longueur d'onde complémentaires. Ainsi, les deux lentilles 12A, 12B forment un doublet dit « asphéro-achromatique » permettant de corriger l'aberration sphérique provoquée par le miroir concave 10, tout en réduisant les aberrations chromatique et de coma, quelle que soit la longueur d'onde de la lumière incidente, ou du moins sur un domaine spectral étendu.

L'inventeur a constaté que le caractère asphérique des lentilles 12A, 12B pris en combinaison avec l'utilisation de verres différents procure une correction des aberrations sphériques qui ne varie pas ou bien varie de manière négligeable en fonction de la longueur d'onde de la lumière incidente sur un domaine spectral relativement étendu par rapport aux télescopes de Schmidt de l'art antérieur.

Cette correction à large spectre est d'autant plus avantageuse que le télescope est destiné à collecter et concentrer la lumière sur un domaine spectral étendu pour obtenir la meilleure efficacité de détection possible.

En pratique, pour former ce doublet asphéro-achromatique, le profil de dispersion de l'indice de réfraction du verre et le profil asphérique des lentilles asphériques 12A, 12B peuvent être sélectionnés de sorte que le doublet corrige l'aberration sphérique du miroir concave 10 avec le minimum de variation chromatique.

De préférence, une des lentilles asphériques est sélectionnée de type « Flint », c'est-à-dire présentant une forte dispersion d'indice de réfraction en fonction de la longueur d'onde et l'autre lentille asphérique est sélectionnée de type « Crown », c'est-à-dire présentant une faible dispersion d'indice de réfraction. Plus précisément, un verre de type « Crown » présente un nombre d'Abbe supérieur à 55 et un indice de réfraction faible, indiquant une faible dispersion chromatique, tandis qu'un verre de type « Flint » présente un nombre d'Abbe inférieur à 50 et un indice de réfraction relativement élevé.

Par exemple, la première lentille asphérique 12A est constituée du verre référencé BK7 présentant un nombre d'Abbe $v1=64$, tandis que la deuxième lentille asphérique 12B est constituée du verre référencé F2 présentant un nombre d'Abbe $v2=32$.

Ainsi, la sélection de ces deux verres permet d'élargir sensiblement le domaine spectral dans lequel peut fonctionner le télescope 1, en particulier dans le domaine de l'optique visible (e.g. entre 450 nm et 750 nm) et dans un domaine infrarouge proche du visible (e.g. entre 475 nm et 900 nm) et/ou dans un domaine ultraviolet (UV) proche du visible (i.e. inférieur à 450 nm, e.g. entre 200 nm et 370 nm).

Plus le domaine spectral de fonctionnement du télescope est étendu, plus le télescope est capable de capter un nombre élevé de photons, ce qui contribue également à accroître la détectivité du télescope, notamment pour permettre la détection d'objets spatiaux de taille encore plus faible.

La faible puissance optique paraxiale des deux lentilles asphériques résultant de la condition d'épaisseur décrite ci-avant permet d'agir sur les autres aberrations de chromatisme axial (ou latéral), de coma, en combinaison avec les lentilles du correcteur de champ de manière à améliorer la correction comme déjà décrit ci-avant.

De retour à la **figure 1**, le télescope 1 présente selon une spécificité de l'invention un nombre d'ouverture $N=F/D$ inférieur ou égal à 2, de préférence à inférieur ou égale 1,30, où F désigne la longueur focale du télescope et D désigne le diamètre de l'ouverture du télescope. Dans le présent exemple, le diamètre de l'ouverture D est le diamètre de la première lentille asphérique 12A servant de pupille d'entrée du télescope 1. Par exemple, les première 12A et deuxième 12B lentilles asphériques ont un même diamètre D.

Grâce à son doublet asphéro-achromatique, le télescope selon l'invention 1 présentant un nombre d'ouverture inférieur à 2, de préférence inférieur à 1,5, idéalement inférieur à 1,3 est capable d'atteindre une qualité d'image bien supérieure à celle que les télescopes de l'état de l'art pourraient atteindre, si ceux-ci étaient configurés avec un tel nombre d'ouverture.

Par exemple, le télescope 1 selon l'invention peut être configuré de manière à atteindre un nombre d'ouverture inférieur à 1,7, ce qui permet avantageusement de faire converger la lumière dans des pixels de petite taille, si tant est que la qualité de l'image est en correspondance avec la taille desdits pixels.

C'est précisément le doublet asphéro-achromatique du correcteur de sphéricité 12 qui permet d'atteindre un nombre d'ouverture aussi faible, malgré sa colocalisation avec le correcteur de champ 14 qui, en raison de sa position au niveau du plan focal, ne permet pas de bénéficier des avantages d'une position de la pupille au centre de courbure du miroir comme cela est le cas pour le télescope de Schmidt conventionnel.

Le télescope 1 selon l'invention permet également de faire contenir un champ image étendu, idéalement d'un angle d'environ 6°, sur un capteur en deux dimensions placé dans le plan focal P du télescope, par exemple de type CCD ou CMOS de dernière génération disponibles sur le marché.

Ce faisant, un nombre d'ouverture inférieur à 1,5, de préférence inférieur à 1,3 permet également de réduire le volume et le poids total du télescope et par conséquent son inertie. Ceci est particulièrement avantageux, notamment dans le cas de la deuxième application, afin d'optimiser la consommation énergétique du satellite embarquant le télescope, comme requis pour les nanosatellites ou « cubesats ». Ainsi, le télescope selon l'invention présente un excellent compromis entre sa taille, son poids et sa puissance optique, à travers un facteur SWaP réduit (*Size, Weight and Power* en anglais) par rapport aux télescopes de l'art antérieur.

Pour une configuration du télescope conforme à celle de la figure 1, l'inventeur a démontré que le diamètre d'ouverture D (ou pupille d'entrée du télescope) peut être avantageusement élargi à 400 mm, 600 mm, 800 mm, voire à des valeurs supérieures à 800 mm, tout en préservant un champ de vision supérieur à 6° et une qualité d'image compatible avec des capteurs opto-électroniques, par exemple de type CCD ou CMOS de grand format utilisés dans des caméras disponibles sur le marché.

Selon les diverses conceptions exposées dans l'article de Terebizh précité, monter à de telles valeurs de diamètre d'ouverture de télescope conduirait à des lentilles ou des miroirs de type Mangin de masse très élevée, rendant le concept quasiment irréalisable en pratique pour intégrer le télescope dans un satellite.

La présente invention garde par contre tout son potentiel de qualité d'image et de faisabilité en grande ouverture (e.g. diamètre d'ouverture de l'ordre 800 mm) en raison de la conception astucieuse du correcteur de sphéricité à base de lentilles asphériques présentant une faible variation d'épaisseur entre le centre et le bord et constituées de verres différents (c.f. doublet asphéro-achromatique tel que décrit ci-avant).

Ainsi, le télescope selon l'invention permet d'accroître la détectabilité d'objets de petite taille ou/et peu lumineux notamment en raison de leur faible taille, tels que des débris spatiaux ou des nanosatellites.

Par exemple, un télescope configuré selon l'exemple de la figure 1 est capable de capter des images spatiales dans un champ de vision étendu présentant un angle de vision typiquement compris entre 3° et 8°, en particulier égal à 6°. Un tel champ de vision permet au télescope d'explorer le plus rapidement possible l'arc géostationnaire depuis une orbite basse (LEO : « Low Earth Orbit » en anglais). La qualité d'image obtenue dans le plan focal P du télescope est quasi-parfaite avec une tache image de diamètre inférieur à 4 $\mu$m, dans le domaine de longueurs d'ondes comprises entre 475 nm et 900 nm, avec une distorsion résiduelle inférieure à 0,005%, pour une ouverture de diamètre égale 230 mm et une longueur focale égale 311 mm, soit un nombre d'ouverture N=F/D=1,35.

De manière avantageuse, le télescope est configuré pour fonctionner dans le domaine spectral de l'optique visible, par exemple entre 380 nm et 780 nm. Ce domaine spectral est le plus efficace pour détecter la lumière diffusée par des satellites et débris de satellites éclairés par la lumière solaire. Ainsi, les composants optiques du télescope 1, notamment le doublet de lentilles asphéro-chromatique 12A-12B du correcteur de sphéricité 12 et les lentilles 14A-14F du correcteur de champ 14 sont constituées d'un matériau adapté au domaine de l'optique visible (e.g. capable de transmettre la lumière à des longueurs d'ondes comprises entre 380 nm et 780 nm).

Dans d'autres variantes de réalisation, les composants optiques du télescope selon l'invention pourront être sélectionnés pour opérer dans le domaine spectral de l'infrarouge proche du visible (e.g. à des longueurs d'onde strictement inférieures à 2,5 $\mu$m), de l'infrarouge moyen (i.e. à des longueurs d'onde comprises entre 3 $\mu$m et 5 $\mu$m), de l'infrarouge thermique (i.e. à des longueurs d'onde comprises entre 8 $\mu$m et 12 $\mu$m) ou à des longueurs d'ondes plus longues encore. Dans ce cas, on prévoira l'utilisation d'éléments réfractifs constitués de verres adaptés à fonctionner dans le domaine de longueurs d'ondes désiré. Le télescope selon la présente invention a un intérêt tout particulier pour les imageurs à infrarouge compacts, dans la mesure où il dispose d'un nombre d'ouverture N=F/D de valeur faible, typiquement inférieur à 1,5, comme désiré généralement dans le domaine infrarouge.

Dans d'autres variantes de réalisation particulières, le télescope selon l'invention pourra être configuré pour opérer dans le domaine spectral du rayonnement ultraviolet (UV) proche de la lumière visible, par exemple à des longueurs d'onde comprises entre 200 nm et 370 nm.

Ainsi, en fonction de l'application visée, le télescope selon l'invention pourra être configuré pour fonctionner dans les domaines du visible, de l'infrarouge et/ou de l'ultraviolet.

Dans le présent exemple, le correcteur de champ 14 comprend six lentilles. Toutefois, selon des variantes de réalisation non illustrées, le nombre de lentilles pourra être adapté notamment en fonction de la configuration des lentilles (i.e. choix des verres, asphéricité, etc).

L'inventeur a démontré qu'au minimum deux lentilles sont nécessaires pour permettre au correcteur de champ 14 d'opérer conjointement la correction de courbure de champ permettant de convertir le champ image courbe issu du miroir concave en un champ planaire dans le plan focal et les corrections d'aberrations de coma et d'astigmatisme (i.e. correction d'aberration à l'ordre 3) résultant de la distance entre les lentilles asphériques 12A, 12B et le miroir concave 10 (i.e. distance inférieure à 1,2.F, de préférence inférieure à F, où F désigne la longueur d'onde du télescope).

De manière générale, l'ajout d'éléments optiques correcteurs au sein du correcteur de champ 14, tels que les lentilles décrites ci-dessus, permet avantageusement de corriger les aberrations géométriques et/ou chromatiques à des ordres supérieurs, de fournir une correction supplémentaire de la distorsion et par conséquent d'atteindre un plus haut niveau de qualité d'image global sur le plus grand champ de vision possible.

En effet, l'ajout de telles lentilles permet de créer des degrés de liberté supplémentaires offrant la possibilité de corriger plus d'aberrations et à des ordres plus élevés. Ainsi, la correction globale apportée par l'ensemble de ces lentilles est le résultat d'une combinaison optimale des contributions des diverses surfaces ou interfaces optiques. Plus le correcteur de champ dispose de surfaces ou d'interfaces, plus il y a de possibilités de correction, réparties sur l'ensemble de ces surfaces.

Un deuxième mode de réalisation va maintenant être décrit en référence à la **figure 4.**

Ce mode de réalisation correspond au premier mode de réalisation de la figure 1, dans lequel le télescope 4 comprend en outre une caméra 44 positionnée en amont des lentilles asphériques 12A, 12B, au niveau du plan focal P du télescope 4 et centrée sur l'axe optique O.

Comme illustré sur la figure 4, la caméra 44 est positionnée juste en sortie du correcteur de champ 14 par rapport au sens de propagation des rayons optiques, i.e. dans le plan focal P. Par souci de concision, seules les différences par rapport à la figure 1 vont être décrites.

La caméra 44 est placée en sortie du correcteur de champ 14, en vis-à-vis de ce dernier, de sorte que la lumière fournie en sortie du correcteur de champ 14 soit captée par la caméra 44. Ainsi, la caméra est configurée pour enregistrer des images des objets observés fournies en sortie du correcteur de champ 14.

Par exemple, la caméra 44 comprend un capteur optique matriciel adapté aux applications spatiales. Ce capteur est sélectionné pour fonctionner dans le domaine du visible, et plus particulièrement dans le domaine de longueur d'ondes comprises entre 475 nm et 900 nm. Ce capteur est de forme planaire et coïncide avec le plan focal P du télescope 4.

Dans des variantes de réalisation, ce capteur pourra être adapté pour fonctionner dans le domaine infrarouge, par exemple jusqu'à des longueurs d'onde de l'ordre de 2,5 $\mu$m.

De manière avantageuse, la caméra 44 est située à l'extérieur de l'ensemble formé par le miroir concave 10 et les lames asphériques 12A, 12B, ce qui est particulièrement avantageux pour remplacer la caméra 44 ou intervenir sur la caméra 44 dans le cadre d'opérations de maintenance, sans avoir à manipuler les autres composants du télescope 4 et par conséquent sans risque de désaligner les autres éléments constitutifs du télescope.

Le télescope 4 comprend en outre un baffle d'entrée 48 adapté à se fixer au correcteur de sphéricité 12A, 12B et destiné à réduire le niveau de lumière parasite afin d'assurer la meilleure détectivité possible du télescope 4. Par ailleurs, ce baffle protège la caméra 44 d'un échauffement solaire excessif.

Le télescope selon l'invention a un nombre d'ouverture inférieur à 2, de préférence inférieur ou égal à 1,3 avec un diamètre d'ouverture D compris entre 5 cm et 80 cm, en fonction de la disponibilité des verres optiques dans la dimension nécessaire. Par exemple, pour un diamètre d'ouverture D d'environ 20 cm, le télescope selon l'invention a un poids inférieur à 10 kg, en excluant le capteur au plan focal P. Un tel poids rend le télescope suffisamment léger pour être embarqué dans un satellite, tout en assurant une robustesse suffisante pour son lancement en orbite. Le télescope selon l'invention peut atteindre une longueur de l'ordre de 40-50 cm, soit environ deux fois plus courte que les télescopes de Schmidt de l'art antérieur.

Dans d'autres mode de réalisation, le diamètre D de l'ouverture pourra être augmenté à une valeur de 400 mm, 600 mm ou 800 mm dans le cas où le télescope est destiné à être embarqué dans des satellites de plus grande taille ou dans le cas où le télescope est destiné à être maintenu au sol, par exemple dans une station d'observation terrestre. On pourra même considérer un diamètre D d'ouverture de plus grande taille, par exemple compris entre 800 mm et 1000 mm.

Les avantages du télescope 4 selon l'invention sont les suivants.

Premièrement, la correction des aberrations optiques du télescope est facilitée, si bien qu'il est possible d'atteindre un nombre d'ouverture inférieur à 2 tout en améliorant la qualité optique des images fournies sur un large champ de vision et à travers un domaine étendu, rendant ainsi possible la détection de débris spatiaux de taille encore plus petite que ce qu'il est possible de détecter avec les télescopes de Schmidt de l'art antérieur.

Deuxièmement, l'équilibrage des masses est assuré pour une bonne tenue mécanique du télescope, notamment lors de son lancement en orbite.

Troisièmement, le plan focal P du télescope est maintenu en dehors de l'ensemble formé par le miroir 10, le correcteur d'asphéricité 12 et le correcteur de champ 14, permettant ainsi de placer un capteur d'image et son électronique de proximité en dehors de l'ensemble, ce qui permet d'accéder facilement au capteur et à son électronique sans avoir à intervenir sur l'ensemble, comme décrit en référence à la figure 4.

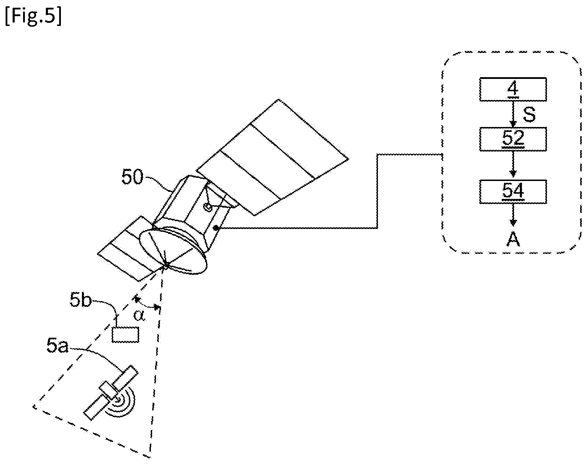

Un satellite 50 selon un mode de réalisation de l'invention va maintenant être décrit en référence à la **figure 5.**

Le satellite 50 comprend un télescope 4, tel que décrit précédemment en référence à la figure 4 pour détecter la présence d'objets spatiaux, tel qu'un nanosatellite 5a et un débris spatial 5b, se trouvant dans le champ de vision $\alpha$ du télescope 4, avec par exemple $\alpha$=8°.

Le télescope 4 selon l'invention est suffisamment compact et léger, si bien qu'il peut être facilement monté à l'intérieur du satellite 50, quelle que soit la taille du satellite. En pratique, le télescope selon l'invention peut être configuré pour pouvoir être intégré dans un espace de dimensions réduites, typiquement comprises entre 300 mm et 400 mm.

En effet, le diamètre d'ouverture D du télescope pourra être librement fixé de sorte que N=F/D<2, ou N<1,5 ou N<1,3, en fonction des contraintes de dimensionnement de l'espace disponible pour la charge utile dans le satellite dans lequel le télescope est destiné à être embarqué et en fonction de la qualité optique minimale souhaitée, par exemple en tenant compte de la taille des objets spatiaux à détecter et/ou de l'orbite sur laquelle se trouve le satellite.

En cas d'embarquement dans un nanosatellite, le diamètre d'ouverture D peut être fixé entre 100 mm et 200 mm. Par exemple, un diamètre d'ouverture D=190 mm permet d'intégrer facilement le télescope dans un nanosatellite de type Cubesat 12U.

En cas d'embarquement dans un satellite de taille moyenne, le diamètre d'ouverture D peut être fixé entre 200 mm et 400 mm. Par exemple, un diamètre d'ouverture D=230 mm permet d'intégrer facilement le télescope dans une plateforme de type HEMERIA EOPD.

En cas d'embarquement dans de plus gros satellites, le diamètre d'ouverture D pourra être compris entre 400 mm ou 500 mm.

On suppose que des objets spatiaux, par exemple un nanosatellite 5a et un fragment de satellite 5b se trouvent dans le champ de vision du télescope.

Le satellite 50 comprend des moyens de calcul 52, tel qu'un ordinateur, pour traiter un signal d'image S fourni en sortie du capteur d'image du télescope. Pour cela, les moyens de calcul 52 du satellite 50 sont configurés pour traiter le signal d'image S, par exemple selon des algorithmes de traitement d'images connus, de manière à détecter dans l'image des objets spatiaux 5a, 5b.

Les moyens de calcul 52 sont en outre configurés pour identifier parmi les objets spatiaux détectés 5a, 5b, celui ou ceux qui pourraient entrer en collision avec le satellite 50.

Le satellite 50 comprend en outre des moyens d'alerte 54 configurés pour émettre un signal d'alerte A, en cas d'identification positive d'un ou plusieurs objets spatiaux à proximité du satellite 50.

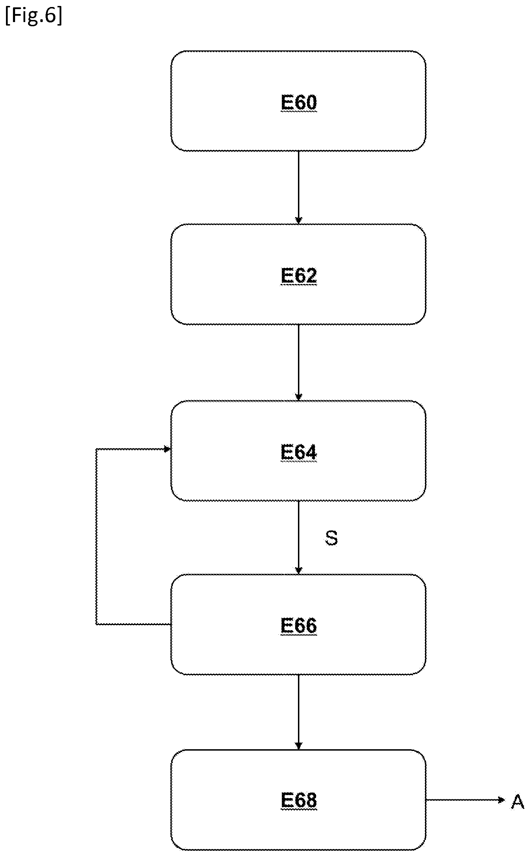

Un procédé de détection d'objets spatiaux selon un mode de réalisation l'invention va maintenant être décrit en référence à la **figure 6.**

Lors d'une étape de fourniture E60, le télescope 4 selon le mode de réalisation décrit précédemment en référence à la figure 4 est monté dans le satellite 50 selon la figure 5. Lors de cette étape, le satellite 50 est également équipé des moyens de calcul 52 et des moyens d'alerte 54 décrits en référence à la figure 4.

Lors d'une étape d'envoi E62, le satellite 50 équipé du télescope 4 est envoyé dans l'espace.

Lors d'une étape d'acquisition E64, le télescope 4 fait l'acquisition d'une ou plusieurs images S.

Lors d'une étape de traitement E66, ces images S sont traitées par les moyens de calcul 52 du satellite 50, de manière à détecter des objets spatiaux.

Lors d'une étape d'alerte E68, un signal d'alerte A est généré en cas de détection d'au moins un objet spatial susceptible d'entrer en collision avec le satellite 50.

De manière avantageuse, la qualité optique de l'image fournie par le télescope 4 selon l'invention est suffisamment élevée pour permettre la détection et l'identification d'objets spatiaux de petites tailles, tels que des fragments de satellites et/ou nanosatellites.

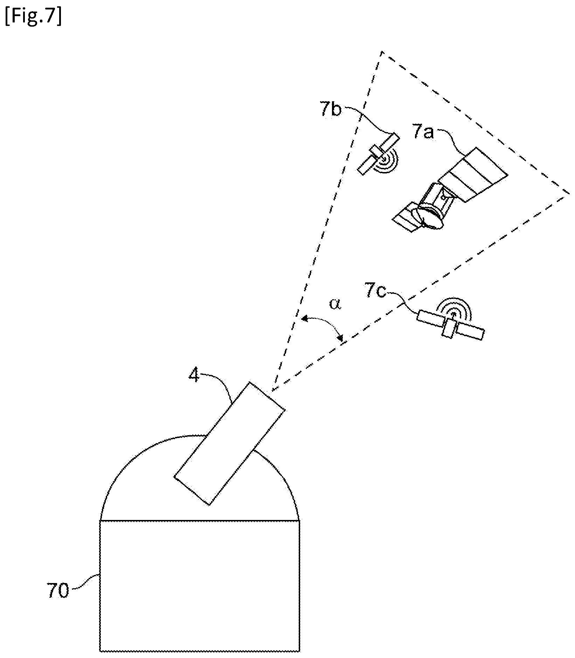

Une station terrestre 70 selon un mode de réalisation de l'invention va maintenant être décrit en référence à la **figure 7.**

La station terrestre 70 comprend un télescope selon l'invention, par exemple le télescope 4 tel que décrit ci-avant en référence à la figure 4. Ce télescope est adapté pour détecter, à proximité d'un satellite 7a sous surveillance, des objets spatiaux tels que des nanosatellites 7b, 7c, dont certains 7b se situent dans le champ de vision $\alpha$ du télescope.

Le même procédé que décrit en référence à la figure 6 s'applique dans le cas où le télescope 4 est intégré lors de l'étape E60 dans la station terrestre 70, à l'exception bien évidemment de l'étape d'envoi E62 dans l'espace.

A cet effet, la station terrestre 70 comprend des moyens de calcul et traitement similaires à ceux décrits en référence au satellite 50, tels qu'illustrés sur la figure 5.

Afin de montrer l'intérêt d'un télescope selon l'invention, ses performances optiques ont été comparées à celles d'une part d'un télescope de type Schmidt et d'autre part de type Sonnefeld.

Le télescope de type Schmidt présente une unique lentille en entrée du télescope avec une face plane et une face légèrement courbée et asphérisée (lame).

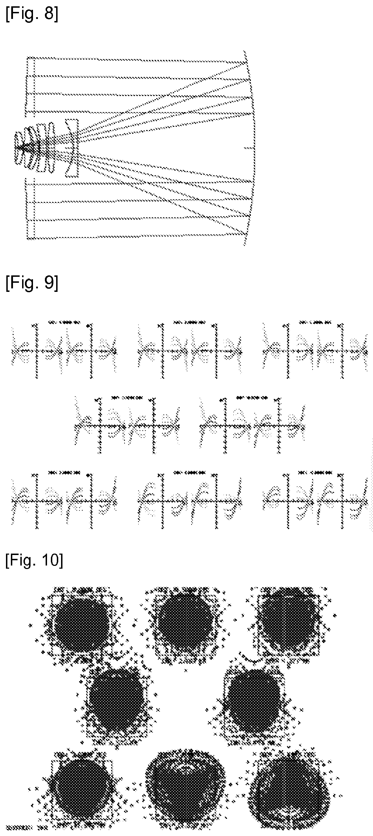

Sur la figure 8, on a représenté ce télescope en coupe avec une ouverture de 190 mm, une longueur focale de 250 mm, soit un nombre d'ouverture F/N = 1,31. On voit quelques tracés de rayons pour le point image au centre du champ sur l'axe optique.

Sur la figure 9, au milieu, on présente les courbes d'aberrations chromatiques transversales (« Ray Fan » en anglais) pour les différents champs objet de 0°; 0,5°; 1°; 1,5 ; 2 ; 2,5° et enfin 3,0° et -3,0° (8 graphes au total, 1 graphe par champ objet). Pour chaque champ objet, le graphe de gauche correspond à des rayons dans le plan tangentiel et le graphe de droite à des rayons dans le plan sagittal. Par ailleurs, pour chaque graphe, les différentes courbes correspondent à différentes longueurs d'onde, lesquelles vont de 0,48 à 0,85 $\mu$m. L'échelle des courbes est de 10 $\mu$m.

Enfin, sur la figure 10, on a représenté l'impact de tous les rayons au niveau du champ image pour ces mêmes champs objet et ces mêmes longueurs d'onde (« spot diagram » en anglais). Tous les impacts tracés dans un cadre qui correspond à un pixel image de 10 $\mu$m x10 $\mu$m.

L'analyse des courbes montre que sur l'axe optique, l'aberration sphérique est bien corrigée pour la longueur d'onde centrale. Par contre, en fonction de la longueur d'onde, une aberration sphérique primaire du troisième ordre apparaît, directement liée à la variation d'indice du verre constituant la lentille d'entrée du télescope (lame).

C'est le problème principal du télescope de type Schmidt. En effet, la lame n'étant pas située au centre du courbure du miroir principal du télescope (à droite sur le schéma représentant le télescope), le correcteur le champ fait son travail de maintien de la qualité à travers tout le champ plan. Toutefois, l'aberration dominante est la variation chromatique de l'aberration sphérique qui conduit à une tache image dépassant le pixel de 10 $\mu$m dans tout le champ.

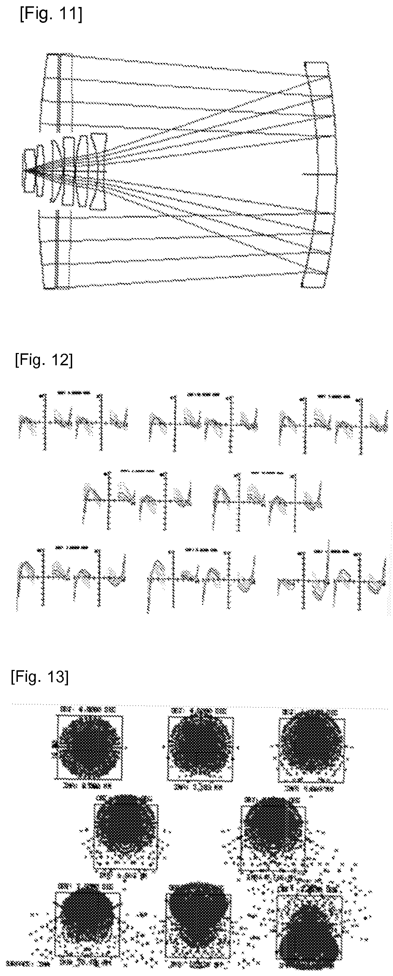

Le télescope de Sonnefeld comporte un miroir de type Mangin (à droite sur le schéma représentant le télescope - il a une certaine épaisseur), des lentilles sphériques, par ailleurs avec une variation d'épaisseur de lentille entre son bord et son centre est importante. Les caractéristiques optiques de ce télescope sont fournies en figure 11. Le télescope de type Sonnefeld schématisé sur la figure 8 représente typiquement celui qui est proposé dans l'article d'Alexey N. Yudin, « Fast catadioptric telescopes for CCD observation of transient events and space surveillance » dans Optical Complex Systems : OCS11, edited by Gérard Berginc, Proc. of SPIE Vol. 8172, 817218 2011 SPIE - CCC code : 0277-786X/11/\$18 - doi :10.1117/12.896699.

Sur la figure 11, on a représenté ce télescope en coupe avec une ouverture de 190 mm, une longueur focale de 250 mm, soit un nombre d'ouverture F/N = 1,31. On voit quelques tracés de rayons pour le point image au centre du champ sur l'axe optique.

Sur la figure 12, au milieu, on présente les courbes d'aberrations chromatiques transversales (« Ray Fan » en anglais) pour les différents champs objet de 0°; 0,5°; 1°; 1,5 ; 2 ; 2,5° et enfin 3,0° et -3,0° (8 graphes au total, 1 graphe par champ objet). Pour chaque champ objet, le graphe de gauche correspond à des rayons dans le plan tangentiel et le graphe de droite à des rayons dans le plan sagittal. Par ailleurs, pour chaque graphe, les différentes courbes correspondent à différentes longueurs d'onde, lesquelles vont de 0,48 à 0,85 $\mu$m. L'échelle des courbes est de 10 $\mu$m.

Enfin, sur la figure 13, on a représenté l'impact de tous les rayons au niveau du champ image pour ces mêmes champs objet et ces mêmes longueurs d'onde (« spot diagram » en anglais). Tous les impacts tracés dans un cadre qui correspond à un pixel image de 10 $\mu$m x10 $\mu$m.

L'analyse des courbes d'aberration chromatiques transversales montre que, sur l'axe, le télescope présente une aberration sphérique résiduelle du 5$^{\text{ième}}$ ordre d'une amplitude totale de 10 $\mu$m environ. De plus, cette aberration varie toujours significativement en fonction de la longueur d'onde. On constate enfin que le « spot diagram » remplit le pixel de 10 $\mu$m dès le centre du champ et le dépasse nettement au bord du champ.

Le télescope selon l'invention se distingue du Sonnefeld exposé ci-dessus par le fait que le miroir n'est pas de type Mangin, que les lentilles sont asphériques et que la variation d'épaisseur de la lentille entre son bord et son centre est faible.

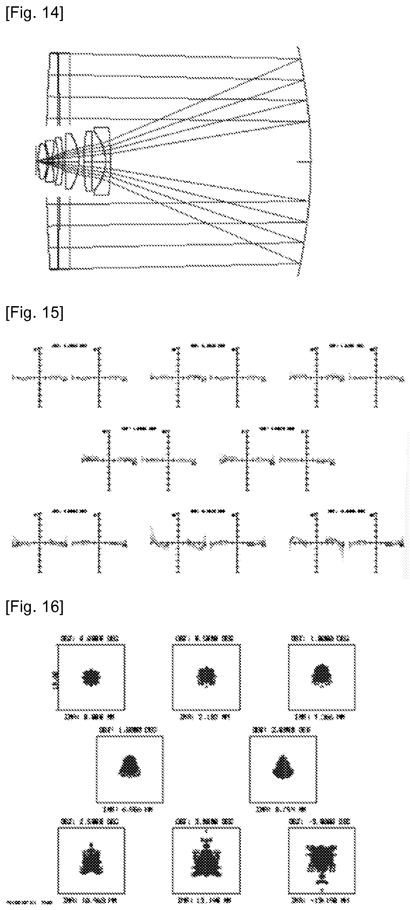

Sur la figure 14, on a représenté le télescope conforme à l'invention en coupe avec une ouverture de 190 mm, une longueur focale de 250 mm, soit un nombre d'ouverture F/N = 1,31. On voit quelques tracés de rayons pour le point image au centre du champ sur l'axe optique.

Sur la figure 15 on présente les courbes d'aberrations transversales (« Ray Fan » en anglais) pour les différents champs objet de 0°; 0,5°; 1°; 1,5 ; 2 ; 2,5° et enfin 3,0° et -3,0° (8 graphes au total, 1 graphe par champ objet). Pour chaque champ objet, le graphe de gauche correspond à des rayons dans le plan tangentiel et le graphe de droite à des rayons dans le plan sagittal. Par ailleurs, pour chaque graphe, les différentes courbes correspondent à différentes longueurs d'onde, lesquelles vont de 0,48 à 0,85 $\mu$m. L'échelle des courbes est de 10 $\mu$m.

Enfin, sur la figure 16, on a représenté l'impact de tous les rayons au niveau du champ image pour ces mêmes champs objet et ces mêmes longueurs d'onde (« spot diagram » en anglais). Tous les impacts sont tracés dans un cadre qui correspond à un pixel image de 10 $\mu$m x 10 $\mu$m.

En bref, la figure 15 peut être comparée à la figure 9 (Schmidt) et à la figure 12 (Sonnefeld).

De manière analogue, la figure 16 peut être comparée à la figure 10 (Schmidt) et à la figure 13 (Sonnefeld).

Sur la figure 15, on note que la qualité image est quasi parfaite sur l'axe avec par ailleurs des aberrations transversales de l'ordre du micron seulement pour toutes les longueurs d'onde. Il y a donc peu ou pas de variation chromatique de l'aberration sphérique. On se rend compte que le « spot diagram » de la figure 16 pourrait s'insérer dans un pixel image de 5 $\mu$m x 5 $\mu$m seulement, par ailleurs pour une résolution image bien meilleure (par exemple 2 fois meilleure par rapport au type Sonnefeld).

Dans la présentation détaillée de l'invention qui est faite précédemment, les termes utilisés ne doivent pas être interprétés comme limitant l'invention aux modes de réalisation exposés dans la présente description, mais doivent être interprétés pour y inclure tous les équivalents dont la prévision est à la portée de l'homme de l'art en appliquant ses connaissances générales à la mise en œuvre de l'enseignement qui vient de lui être divulgué.

## Revendications

1. Télescope (1 ; 4) de Schmidt configuré pour former une image dans un plan focal (P), le télescope comprenant un unique miroir, le miroir étant concave (10) et n'étant pas un miroir de Mangin, un correcteur de sphéricité (12) adapté à corriger des aberrations sphériques du miroir concave (10), un correcteur de champ (14) comprenant une surface d'entrée optique (14A.1) et une surface de sortie optique de laquelle la lumière est destinée à sortir en direction du plan focal (P), ladite surface de sortie optique étant positionnée au niveau du plan focal (P), le miroir concave (10), le correcteur de sphéricité (12) et le correcteur de champ (14) étant centrés sur un même axe optique (O) du télescope, le télescope étant **caractérisé en ce que** le correcteur de sphéricité (12) comprend deux lentilles asphériques (12A, 12B) telles que :

- chaque lentille asphérique (12A, 12B) comprend deux faces (12A.1, 12A.2 ; 12B.1, 12B.2), dont l'une au moins est courbe, en particulier de forme sphérique, et dont l'une au moins présente un profil asphérique,
- chaque lentille asphérique (12A, 12B) présente une variation d'épaisseur maximale ($\Delta e1$ ; $\Delta e2$) entre un centre et un bord de ladite lentille, qui est comprise entre 1% et 5%, de préférence entre 1% et 3%, d'un diamètre (D ; D1, D2) de ladite lentille (12A, 12B) ;
- les deux lentilles asphériques (12A ; 12B) sont composées d'un verre optique différent de manière à former un doublet achromatique, de préférence de type Flint-Crown ;
- les deux lentilles asphériques (12A, 12B) présentent un trou central (120) centré sur l'axe optique (O) et à travers lequel est placé le correcteur de champ (14) ;
- les deux lentilles asphériques (12A, 12B) sont placées entre :

• un premier plan (P') situé à une première distance ($e_1$) du plan focal (P) du télescope (1) en s'éloignant du miroir concave (10) ; et
• un deuxième plan (T4) situé à une deuxième distance ($e_2$) de la surface d'entrée optique (14A.1) du correcteur de champ (14) en se rapprochant du miroir concave (10), où les première ($e_1$) et deuxième ($e_2$) distances sont égales à 1/10 d'une distance séparant le miroir concave (10) du plan focal (P) du télescope (1) ;

et **en ce que** le télescope est configuré de sorte qu'il présente un nombre d'ouverture (N) inférieur ou égal à 2, de préférence inférieur ou égal à 1,5 ou 1,3.

2. Télescope (1 ; 4) selon la revendication 1, dans lequel le nombre d'ouverture (N) n'est pas égal à 1,31.

3. Télescope (1 ; 4) selon l'une quelconque des revendications 1 à 2, dans lequel le correcteur de champ (14) comprend un ensemble d'au moins deux lentilles (14A, 14B, 14C, 14D, 14E, 14F) configurées pour convertir un champ optique courbe en sortie du miroir concave (10) en un champ optique planaire et pour corriger une aberration de coma et une aberration d'astigmatisme du télescope.

4. Télescope (1 ; 4) selon la revendication 3, dans lequel le correcteur de champ (14) comprend en outre au moins une lentille additionnelle configurée pour autoriser une correction de distorsion.

5. Télescope (1 ; 4) selon la revendication 3 ou 4, dans lequel au moins une lentille du correcteur de champ (14) est asphérique.

6. Télescope (1 ; 4) selon l'une quelconque des revendications 1 à 5, dans lequel les lentilles du correcteur de champ (14) sont composées d'un même verre optique.

7. Télescope (1 ; 4) selon l'une quelconque des revendications 1 à 6, dans lequel le miroir concave est asphérique.

8. Télescope (1 ; 4) selon l'une quelconque des revendications 1 à 7, configuré pour fonctionner dans un domaine spectral visible et un domaine spectral infrarouge et/ou un domaine spectral ultraviolet.

9. Télescope (4) selon l'une quelconque des revendications 1 à 8, comprenant en outre un capteur optique (44) positionné dans le plan focal (P) du télescope (4) en vis-à-vis du correcteur de champ (14).

**Patentansprüche**

1. Schmidt-Teleskop (1; 4), das so ausgebildet ist, dass es in einer Brennebene (P) ein Bild erzeugt, wobei das Teleskop einen einzigen Spiegel umfasst, wobei der Spiegel konkav (10) ist und kein Manginspiegel ist, einen Sphärizitätskorrektor (12), der so ausgelegt ist, dass er sphärische Aberrationen des konkaven Spiegels (10) korrigiert, einen Feldkorrektor (14), der eine optische Eintrittsfläche (14A.1) und eine optische Austrittsfläche umfasst, aus der das Licht in Richtung der Brennebene (P) austreten soll, wobei die optische Austrittsfläche im Bereich der Brennebene (P) platziert ist, wobei der konkave Spiegel (10), der Sphärizitätskorrektor (12) und der Feldkorrektor (14) auf ein und dieselbe optische Achse (O) des Teleskops zentriert sind, wobei das Teleskop **dadurch gekennzeichnet ist, dass** der Sphärizitätskorrektor (12) zwei asphärische Linsen (12A, 12B) derart umfasst, dass:

- jede asphärische Linse (12A, 12B) zwei Flächen (12A.1, 12A.2; 12B.1, 12B.2) umfasst, von denen mindestens eine gekrümmt ist, insbesondere eine Kugelform aufweist, und von denen mindestens eine ein asphärisches Profil aufweist,
- jede asphärische Linse (12A, 12B) eine maximale Abweichung der Dicke ($\Delta e1$; $\Delta e2$) zwischen einer Mitte und einem Rand der Linse aufweist, die zwischen 1% und 5%, vorzugsweise zwischen 1% und 3%, eines Durchmessers (D; D1, D2) der Linse (12A, 12B) beträgt;
- die beiden asphärischen Linsen (12A; 12B) aus einem unterschiedlichen optischen Glas aufgebaut sind, sodass sie ein achromatisches Dublett bilden, vorzugsweise ein Flint-Kron-Glas;
- die beiden asphärischen Linsen (12A, 12B) ein mittiges Loch (120) aufweisen, das auf die optische Achse (O) zentriert ist und durch das der Feldkorrektor (14) platziert ist;
- die beiden asphärischen Linsen (12A, 12B) platziert sind zwischen:

- einer ersten Ebene (P'), die in einem ersten Abstand ($e_1$) zur Brennebene (P) des Teleskops (1) liegt, wenn sie sich vom konkaven Spiegel (10) entfernen; und
- einer zweiten Ebene (T4), die in einem zweiten Abstand ($e_2$) zur optischen Eintrittsfläche (14A.1) des Feldkorrektors (14) liegt, wenn sie sich dem konkaven Spiegel (10) nähern, wobei der erste ($e_1$) und der zweite ($e_2$) Abstand 1/10 eines Abstands entsprechen, durch den der konkave Spiegel (10) von der Brennebene (P) des Teleskops (1) getrennt ist;

und dadurch, dass das Teleskop derart ausgebildet ist, dass es eine Blendenzahl (N) von kleiner oder gleich 2, vorzugsweise kleiner oder gleich 1,5 oder 1,3 aufweist.

2. Teleskop (1; 4) nach Anspruch 1, wobei die Blendenzahl (N) ungleich 1,31 ist.

3. Teleskop (1; 4) nach einem der Ansprüche 1 bis 2, wobei der Feldkorrektor (14) eine Anordnung aus mindestens zwei Linsen (14A, 14B, 14C, 14D, 14E, 14F) umfasst, die so ausgebildet sind, dass sie ein gekrümmtes optisches Feld am Austritt des konkaven Spiegels (10) in ein planares optisches Feld umwandeln und eine Koma-Aberration und eine Astigmatismus-Aberration des Teleskops korrigieren.

4. Teleskop (1; 4) nach Anspruch 3, wobei der Feldkorrektor (14) weiter mindestens eine zusätzliche Linse umfasst, die so ausgebildet ist, dass sie eine Korrektur der Verzerrung zulässt.

5. Teleskop (1; 4) nach Anspruch 3 oder 4, wobei mindestens eine Linse des Feldkorrektors (14) asphärisch ist.

6. Teleskop (1; 4) nach einem der Ansprüche 1 bis 5, wobei die Linsen des Feldkorrektors (14) aus ein und demselben optischen Glas aufgebaut sind.

7. Teleskop (1; 4) nach einem der Ansprüche 1 bis 6, wobei der konkave Spiegel asphärisch ist.

8. Teleskop (1; 4) nach einem der Ansprüche 1 bis 7, das so ausgebildet ist, dass es in einem sichtbaren Spektralbereich und einem Infrarot-Spektralbereich und/oder einem Ultraviolett-Spektralbereich arbeitet.

9. Teleskop (4) nach einem der Ansprüche 1 bis 8, das weiter einen optischen Sensor (44) umfasst, der in der Brennebene (P) des Teleskops (4) gegenüber dem Feldkorrektor (14) platziert ist.

**Claims**

1. A Schmidt telescope (1; 4) configured to form an image in a focal plane (P), the telescope comprising a single mirror, the mirror being concave (10) and not being a Mangin mirror, a sphericity corrector (12) adapted to correct spherical aberrations of the concave mirror (10), a field corrector (14) comprising an optical input surface (14A.1) and an optical output surface from which the light is configured to emerge in the direction of the focal plane (P), said optical output surface being positioned at the level of the focal plane (P), the concave mirror (10), the sphericity corrector (12) and the field corrector (14) being centered on the same optical axis (O) of the telescope, the telescope being **characterized in**

**that** the sphericity corrector (12) comprises two aspherical lenses (12A, 12B) such that:

- each aspherical lens (12A, 12B) comprises two faces (12A.1, 12A.2; 12B.1, 12B.2), at least one of which is curved, in particular spherical, and at least one of which has an aspherical profile,
- each aspherical lens (12A, 12B) has a maximum thickness variation ($\Delta e1$; $\Delta e2$) between a center and an edge of said lens, which is between 1% and 5%, preferably between 1% and 3%, of a diameter (D; D1, D2) of said lens (12A, 12B);
- the two aspherical lenses (12A; 12B) are composed of a different optical glass so as to form an achromatic doublet, preferably of the Flint-Crown type;
- the two aspherical lenses (12A, 12B) have a central hole (120) centered on the optical axis (O) and through which the field corrector (14) is placed;
- the two aspherical lenses (12A, 12B) are positioned between:

  - a first plane (P') located at a first distance ($e_1$) from the focal plane (P) of the telescope (1) away from the concave mirror (10); and
  - a second plane (T4) located at a second distance ($e_2$) from the optical input surface (14A.1) of the field corrector (14) towards the concave mirror (10), where the first ($e_1$) and second ($e_2$) distances are equal to 1/10 of a distance separating the concave mirror (10) from the focal plane (P) of the telescope (1);

and **in that** the telescope is configured so that it has an aperture number (N) less than or equal to 2, preferably less than or equal to 1.5 or 1.3.

2. The telescope (1; 4) according to claim 1, wherein the aperture number (N) is not equal to 1.31.

3. The telescope (1; 4) according to any one of claims 1 to 3, wherein the field corrector (14) comprises an assembly of at least two lenses (14A, 14B, 14C, 14D, 14E, 14F) configured to convert a curved optical field at the output of the concave mirror (10) into a planar optical field and to correct a coma aberration and an astigmatism aberration of the telescope.

4. The telescope (1; 4) as claimed in claim 3, wherein the field corrector (14) further comprises at least one additional lens configured to allow a distortion correction.

5. The telescope (1; 4) according to claim 3 or 4, wherein at least one lens of the field corrector (14) is aspherical.

6. The telescope (1; 4) according to any one of claims 1 to 5, wherein the lenses of the field corrector (14) are composed of the same optical glass.

7. The telescope (1; 4) according to any one of claims 1 to 6, wherein the concave mirror is aspherical.

8. The telescope (1; 4) according to any one of claims 1 to 7, configured to operate in a visible spectral range and an infrared spectral range and/or an ultraviolet spectral range.

9. The telescope (4) according to any one of claims 1 to 8, further comprising an optical sensor (44) positioned in the focal plane (P) of the telescope (4) opposite the field corrector (14).

[Fig.1]

[Fig.2]

[Fig.3]

[Fig.4]

[Fig.5]

[Fig.6]

```
        ┌─────────────────────┐
        │                     │
        │        E60          │
        │                     │
        └──────────┬──────────┘
                   │
                   ▼
        ┌─────────────────────┐
        │                     │
        │        E62          │
        │                     │
        └──────────┬──────────┘
                   │
                   ▼
   ┌──▶ ┌─────────────────────┐
   │    │                     │
   │    │        E64          │
   │    │                     │
   │    └──────────┬──────────┘
   │               │ S
   │               ▼
   │    ┌─────────────────────┐
   │    │                     │
   └────│        E66          │
        │                     │
        └──────────┬──────────┘
                   │
                   ▼
        ┌─────────────────────┐
        │                     │
        │        E68          │─────▶ A
        │                     │
        └─────────────────────┘
```

[Fig.7]

[Fig. 8]

[Fig. 9]

[Fig. 10]

[Fig. 11]

[Fig. 12]

[Fig. 13]

[Fig. 14]

[Fig. 15]

[Fig. 16]

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 0159488 A1

**Littérature non-brevet citée dans la description**

- **V. YU TEREBIZH**. On the capabilities of survey of telescopes of moderate size. *The Astronomical Journal*, November 2016, vol. 152, 121
- **YUDIN ALEXEY N et al.** Fast catadioptric telescopes for CCD observation of transient events and space surveillance. *OPTICAL COMPLEX SYSTEMS: OCS11, SPIE, 1000 20TH ST. BELLINGHAM WA 98225-6705 USA*, 22 September 2011, vol. 8172 (1), 1-10
- REFLECTIVE AND CATADIOPTRIC OBJECTIVES. **JONES**. HANDBOOK OF OPTICS. MCGRAW-HILL, 01 January 1995, vol. II, 18.01-18.45
- New designs of survey telescopes. **YU TEREBIZH V**. ASTRONOMISCHE NACHRICHTEN. AKADEMIE VERLAG, 23 August 2011, vol. 332, 714-742
- **WYNNE**. FIELD CORRECTORS FOR ASTRONO-MICAL TELESCOPES. *PROGRESS IN OPTICS; [PROGRESS IN OPTICS], AMSTERDAM, NORTH HOLLAND, NL*, 01 January 1961, 135-164
- Astronomical Optics. **SCHROEDER DANIEL**. Astronomical Optics. Academic Press, Inc., 01 January 1987, 134-138
- **ALEXEY N. YUDIN**. Fast catadioptric telescopes for CCD observation of transient events and space surveillance. *Optical Complex Systems : OCS11*, vol. 8172